(19) Europäisches Patentamt
European Patent Office
Office européen des brevets

(11)     **EP 0 781 398 B1**

(12)                    **FASCICULE DE BREVET EUROPEEN**

(45) Date de publication et mention
de la délivrance du brevet:
**25.04.2007   Bulletin 2007/17**

(21) Numéro de dépôt: **95935369.9**

(22) Date de dépôt: **15.09.1995**

(51) Int Cl.:
***G01D 5/26*** *(2006.01)*

(86) Numéro de dépôt international:
**PCT/EP1995/003643**

(87) Numéro de publication internationale:
**WO 1996/008693 (21.03.1996 Gazette 1996/13)**

(54) **DISPOSITIF ET PROCEDE DE MESURE DE MOUVEMENT OU DE POSITIONNEMENT**

VERFAHREN UND VORRICHTUNG ZUR POSITIONS- UND BEWEGUNGSMESSUNG

MOVEMENT AND POSITION MESURING DEVICE AND METHOD

(84) Etats contractants désignés:
**AT CH DE DK ES FR GB IT LI**

(30) Priorité: **15.09.1994   CH 280594**
         **10.04.1995   CH 101895**
         **28.08.1995   CH 244895**

(43) Date de publication de la demande:
**02.07.1997   Bulletin 1997/27**

(73) Titulaire: **Wagner, Jean-Jacques**
**9492 Eschen (LI)**

(72) Inventeur: **WAGNER, Jean-Jacques**
**FL-9492 Eschen (LI)**

(74) Mandataire: **Riederer, Conrad A. et al**
**c/o Riederer Hasler & Partner**
**Patentanwälte AG**
**Elestastrasse 8**
**Postfach**
**7310 Bad Ragaz (CH)**

(56) Documents cités:
**WO-A-88/00332          DE-A- 3 905 508**
**DE-A- 4 230 405          DE-U- 9 104 157**
**GB-A- 2 156 972**

• **PATENT ABSTRACTS OF JAPAN vol. 6 no. 141**
**(P-131) [1019] ,30 Juillet 1982 & JP,A,57 064105**
**(CANON K.K.) 19 Avril 1982,**

## Description

Le domaine de l'invention concerne un procédé et/ou un dispositif permettant de détecter à l'aide d'un faisceau lumineux la position relative ou absolue selon l'axe de déplacement d'un support de graduation par rapport à un support appartenant à un dispositif, qui comprend:

a- une source de lumière générant un flux lumineux,
b- un support de graduation comprenant une graduation placée dans le flux lumineux qu'il modifie,
c- un support contenant un ou plusieurs éléments récepteurs pouvant intercepter le flux lumineux modifié,
d- un ou plusieurs éléments récepteurs permettant de convertir l'intensité de lumière interceptée en un effet physique,
e- et un circuit de détection permettant de générer un signal électrique

permettant de réaliser des capteurs de mouvement et de positionnement.

La demande de brevet 474 149 A2 (Kawamura) décrit un dispositif identique sous la forme d'un encodeur incrémental. Le principe de fonctionnement est caractérisé en ce que la graduation est formée d'une demi-division transparente et d'une demi-division focalisante auxquelles correspondent deux diodes sensibles à la lumière d'une largeur équivalent à une demi-division. Le niveau de résolution réalisable par le dispositif n'est pas quantifié.

La dimension du spot lumineux est définie comme infinitivement petite et la zone non-éclairée comme non-éclairée. Ce point de vue est valable, tant que l'optique est parfaite et les problèmes de diffraction ne sont pas visibles.

Le fonctionnement du dispositif dépend entre-autres de la dimension du spot lumineux projeté par la partie focalisante sur les diodes de détection. Pour par exemple une lentille de $20\mu m$ et de distance focale de $80\mu m$ qui correspond à une dimension de division de $40\mu m$, la largeur de spot lumineux correspond à 30% de la largeur de l'élément récepteur. Les courbes de courant décrites dans la demande de Kawamura ne sont plus utilisables, en particulier la résolution ne pourra pas être multipliée comme indiqué.

La résolution unitaire du dispositif correspond à une alternance de signal digital par longueur de division. La résolution du capteur est définie par la résolution de la graduation.

La résolution unitaire correspond à la résolution définie par la disposition géométrique et physique des éléments récepteurs. La résolution de graduation correspond à la résolution définie par la dimension d'une division de la graduation.

Un autre désavantage de ce dispositif réside en la conception du signal de position qui ne corresond pas à l'art usuel, ce qui est un frein à la commercialisation du produit.

De plus la demande ne fait pas état des contraintes relative à la conception de la source lumineuse. Elle ne fait pas état de formes préférentielles de la lentille pour améliorer la résolution du dispositif.

La demande EP 0206 656 (Leonard) décrit un dispositif , qui fonctionne avec une graduation faite d'éléments ayant une demi-portion laissant passer la lumière et une deuxième demi-portion retenant la lumière. Une miniaturisation du support de graduation est limitée, soit pour des raisons de fabrication d'ordre mécanique ou soit par les coûts élevés relatif à la confection de graduation en verre par procédé lithographique.

La demande de brevet EP 0489399 A2 (Igaki) utilise une série d'éléments optiques disposés sur un cylindre et un flux lumineux traversant deux fois la même graduation. Lors d' un premier passage une moitié du flux lumineux est réfléchie et l'autre moitié est modifiée par effet de grille et projetée sur la face opposée de la graduation où le flux lumineux est partager selon trois directions. La résolution pouvant être obtenue dépend de la longueur d'onde et du diamètre du support de graduation selon la formule:

$$(N-1/4)*(pas\ de\ graduation)*(pas\ degraduation)/(Longueur\ d'onde)$$
$$<\ diamètre\ de\ la\ graduation\ <$$
$$(N+1/4)*(pas\ de\ graduation)*(pas\ degraduation)/(Longueur\ d'onde)$$

Celà signifie que à un diamètre de 15 mm correspond une résolution de environ 760 pas. Le produit commercial annonce une résolution de environ 80'000 pas de division, ce qui demande un circuit de détection complexe pour le traitement des signaux remis par les trois diodes réceptrices. La dispositon du support de graduation en forme obligatoire de cylindre ne permet pas par exemple de réaliser un capteur de niveau.

Le brevet US-4531300 montre un exemple de réalisation d'un appareil de mesure de niveau utilisant une technique identique à Leonard. Ce dispositif est particuliérement encombrant et trop coûteux pour concurrencer les produits classiques à bulle. L'emploi de capteurs capacitifs ou magnéto-résistifs nécessite un circuit convertisseur analogique/digital de plus de 12 bits de résolution, plus difficile à mettre en oeuvre qu'un circuit parement digital.

La demande de brevet PCT/EP 93/02415 décrit un système de mesure de kilomètre nécessitant un capteur pour la mesure de la dynamique de déplacement d'un véhicule. L'application d'un capteur gravitationnel est intéressante de part sa stabilité de fonctionnement dans le temps et sa simplicité. Les valeurs à mesurer demandent un capteur de haute résolution, non-disponible sur le marché.

Les dispositifs décrits ci-dessus ne permettent pas de réaliser des capteurs de petites dimensions à mesure absolue de position sur une base de code linéaire comme décrit dans la demande de brevet JP 3006423. Ils ne permettent aussi pas de réaliser des capteurs gravitationnels de haute résolution comme le souhaite certaines applications du marché.

L'objectif de l'invention est de recourir à un nouveau procédé et dispositif permettant de détourner les défaux propres à l'état de la technique pour améliorer substanciellement la performance, en particulier en ce qui concerne la résolution, de la fonction relative à la mesure incrémentale ou absolue d'un déplacement.

D'autres objectifs de l'invention est d'améliorer les caractéristiques électriques de ce type de dispositif, en particulier en ce qui concerne la consommation de courant, et de réduire les coût de production.

L'invention est caractérisée par les revendications 1 et 5, les revendication 34 à 37 décrivant des applications spécifiques et les autres revendications décrivant des formes d'exécutions spéciales ou préférencielles.

La procédure caractérisée par la revendication 1 diffère de la procédure décrite par Kawamura en ce que la combinaison d'un seul spot lumineux avec au moins un élément récepteur est utilisée pour la création d'un signal alternatif décrivant le déplacement du support de graduation par rapport au support contenant les éléments récepteurs. Un exécution préférentielle du dispositif comprend une graduation faite de lentilles cylindriques placées côte à côte. Dans ce cas, toute l'énergie traversant la graduation peut être focalisée sur un ou plusieurs éléments récepteurs. Une disposition préférée des éléments récepteurs correspond en une série d'éléments dont la largeur par rapport à la ligne médiane de la graduation est plus petite que la longueur de division, ce qui permet aussi d'obtenir une résolution unitaire supérieure à celle définie par la division de la graduation. Une haute résolution unitaire permet à résolution égale de simplifier le circuit de détection.

L'avantage de l'invention est de pouvoir concevoir un système de mesure de déplacement à barrière optique travaillant dans des conditions optimales, ce aussi bien pour des dimensions élevées de la division que pour des dimensions correpondant aux limites de résolution de l'élément focalisant. La possibilité d'augmenter la résolution unitaire par rapport à la résolution de graduation permet d'utiliser chaque technologie de façon optimale.

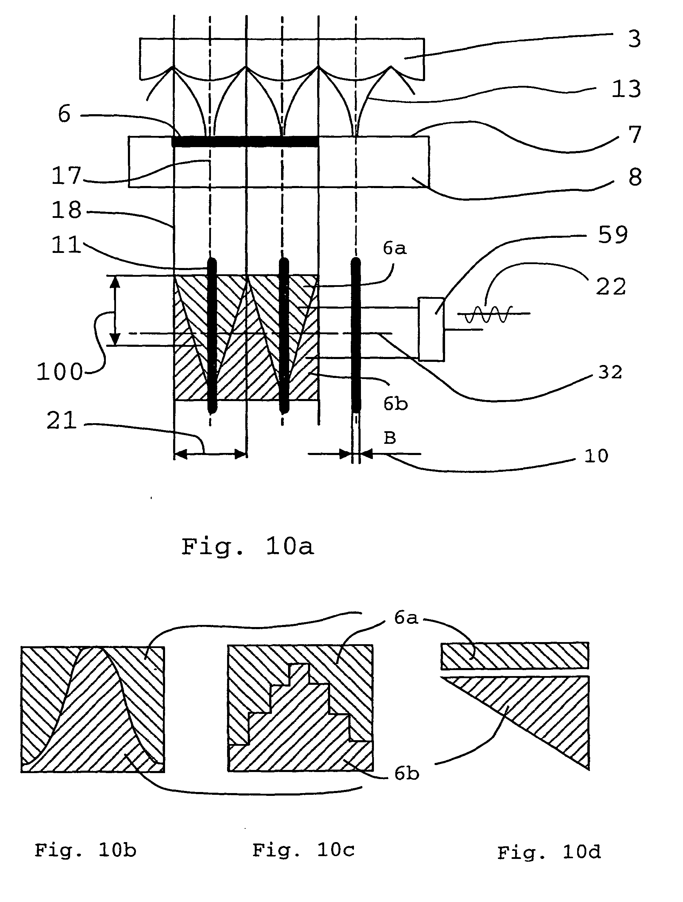

La forme cylindrique de la lentille permet de réduire la largeur du spot lumineux d'une valeur maximale et par le choix de la longueur de celle-ci de garantir un passage suffisant d'énergie lumineuse. Elle permet aussi de réaliser de façon élégante une forme de graduation adaptée à la conception de dispositifs de mesure absolus. La forme oblongue du spot lumineux caractérisée par une lentille cylindrique est aussi particulièrement adaptée à la réalisation du dispositif décrit en figure 10a.

L'invention permet de réaliser des capteurs bons marchés, de très haute résolution et/ou petites dimensions. Grâce à la petite dimension des lentilles et que la source lumineuse peut être placée très proche du support de graduation, il est possible de réaliser des capteurs de dimensions axiales très petites.

L'exemple d'exécution ci-dessous permet de mieux illustrer les avantages de l'invention par rapport à l'art connu: Soit une graduation qui est formée de lentilles de largeur égale à 16 $\mu$m ayant une distance focale de 80 $\mu$m, qui sont combinées avec des éléments récepteurs dont la largueur est de 4 $\mu$m et la longueur 200 $\mu$m. A une largeur de ces éléments correspond une longueur de division de 16$\mu$m. Cette disposition permet de placer sur un diamètre de 15,3 mm 3000 divisions. La modulation du flux lumineux et telle que la largeur minimale possible "M" de l'impact lumineux sur le plan des éléments récepteurs mesure environ 3 $\mu$m. L'emploi de 4 diodes de 4$\mu$m de large par division permet par évaluation différentielle du courant de porter la résolution à 6000 divisions. Un deuxième groupe d'éléments récepteurs déplacé de 1/4*1/4 de division permet de former un signal en forme de cosinus. Un simple circuit de détection multipliant par 4 la résolution unitaire permet de porter la résolution à 24'000 pas. Un circuit de détection et un dispositif mécanique performant permet de porter cette résolution à un facteur 256, soit à 153'600 divisions. Le choix d'une distance focale de 40$\mu$m combiné avec une disposition mécanique soignée des éléments constitutifs du dispositif permet de doubler la résolution de l'exemple ci-dessus.

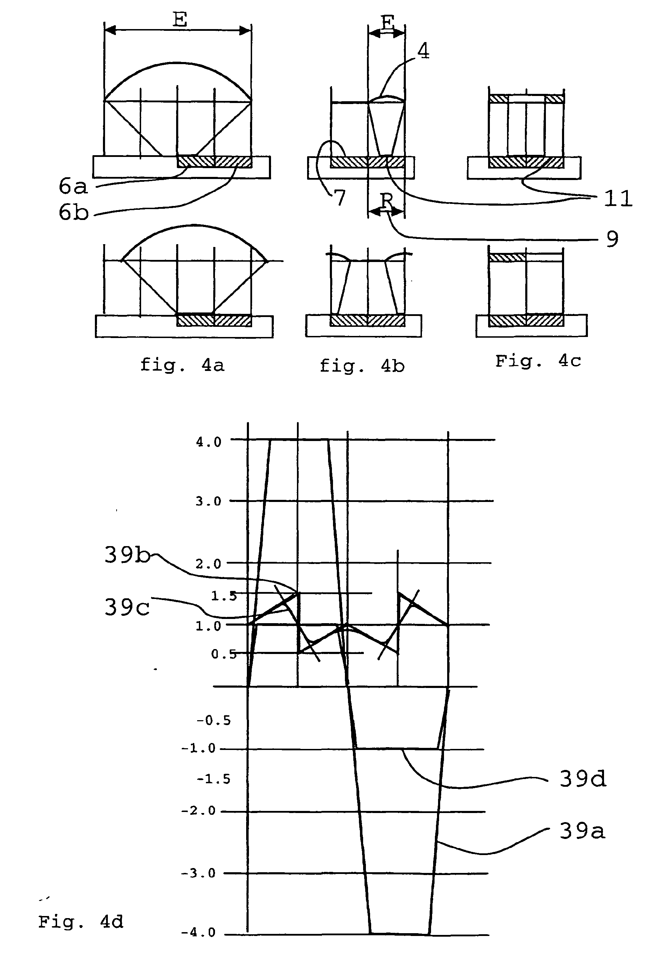

Le dispositif proposé par Kawamura ramené à l'exemple ci-dessus correspond à une division de graduation de 8$\mu$m, soit une lentille de 4$\mu$m, ce qui n'est pas réalisable, puique la distance focale de cet élément devra être de 1-2 $\mu$m pour générer un spot lumineux suffisemment petit. De plus le rapport des signaux de courant générés par les élément récepteurs est pour un spot infiniment petit de 8. Ces deux valeurs démontrent que le dispositif de Kawamura ne fonctionne pas pour de telles valeurs de résolutions. Inversément le dispositif de Kawamura permet d'atteindre une résolution unitaire d'environ 10 fois inférieure à l'invention. Selon la démonstration de la figure 4, il revient à dire que, à résolution unitaire égale, sous flux lumineux égal et sous conditions de fonctionnement idéales, l'invention permet de générer un signal électrique de valeur 8x plus élevée que le signal généré selon le dispositif décrit par Kawamura.

Une analyse du dispositif selon Leonard laisse apparaître qu'un tel dispositif permet d'atteindre des résolutions de 2 à 4 fois moins élevées, pour une conception de qualité égale 3 à 4 fois moins élevée que le dispositif de l'invention. Une graduation de même résolution demande une grille de 8μm de période, ce qui n'est pas fabricable économiquement.

L'exemple cité ci-dessus démontre que l'art connu ne permet pas de réaliser des résolutions unitaires égalas à l'invention. Les expériences faites à ce jour ont démontrés qu'il sera possible sans dispositions spéciales de fabriquer des graduations selon l'invention d'une longueur de division égale à 8μm.

La graduation peut être fabriquée par injection plastique, ce qui permet dans une même opération de réaliser le support de graduation. L'adjonction d'éléments de construction additionnels, comme par exemple une aide au montage, peut être réalisée sans augmentation notoire du coût de production.

La revendication 5 décrit les bases de la conception du dispositif. La revendication 7 décrit les caractéristiques des éléments récepteurs. La revendication 8 décrit une disposition préférentielle des éléments récepteurs permettant de générer par l'intermédiaire d'une paire d'élément récepteur un signal alternatif 22 dont la valeur ou la forme est indépendante de l'intensité du flux lumineux. La revendication 9 décrit que les éléments récepteurs peuvent être répartis sous plusieurs divisions. La revendication 12 décrit que pour une position optimale de la source lumineuse un rapport optimal entre la largeur du spot lumineux et la largeur des éléments récepteurs correspond à un signal de forme sinus, qui peut être intégré pour une plus grande résolution du dispositif. La revendication 18 décrit une forme préférentielle de l'élément optique correspond à une lentille cylindrique.

Les revendications 14, et 15 décrivent une graduation faite d'éléments optiques différents, chaque division pouvant recevoir une valeur numérique permettant de définir la position du support de graduation de manière absolue selon la procédure décrite dans la revendication 2. Ceci permet de réaliser des encodeurs absolus aux même dimensions que les capteurs décrits ci-dessus. Cette technologie, qui peut être simplement réalisée par l'emploi de lentilles cylindriques, est particulièrement avantageuse pour la réalisation d'encodeurs absolus de petites dimensions.

Le circuit de détection peut être intégré avec les éléments récepteurs sur un même support, ce qui sera aussi le cas pour par exemple un capteur absolu de résolution égale à 13 bits. Le circuit sera de petite dimension et bon marché.

L'invention permet grâce aux caractéristiques décrites ci-dessus de concevoir des produits nouveaux de conception simple, fonctionnant avec peu d'éléments, qui ne sont pas réalisables selon l'art connu. Il permet de fabriquer des capteurs, qui sont à la fois bon marché, de haute résolution, de dimensions réduites, qui consomment peu de courant, qui peut livrer des impulsions incrémentales et/ou des valeurs de position absolues, et qui seront adaptés à la micro-électronique future dont l'évolution va dans le sens de la miniaturisation et l'économique d'énergie.

Pour l'explication de l'invention il est fait recours aux plans suivant:

fig. 1 Vue schématique du dispositif de mesure.
fig. 2 Signal électrique en fonction du signal lumineux
fig. 3 Disposition des éléments
fig. 4 Comparaison des performences
fig. 5 Conception préférentielle de la graduation
fig. 6 Portion focalisante
fig. 7 Variante de conception du dispositif de mesure
fig. 8 Variante de conception du dispositif de mesure
fig. 9 Disposition des éléments récepteurs
fig. 10 Signal selon Kawamura
fig. 11 Graduation à valeur numériques
fig. 12 Exemple de code de détection linéaire
fig. 13 Support de graduation pour un encodeur
fig. 14 Circuit récepteur pour mesure absolue
fig. 15 Synchronisation des signaux de positions
fig. 16 Exemple de circuit neuronique
fig. 17 Oscillations et procédure de détection
fig. 18 Disposition de la source lumineuse
fig. 19 Ensemble de capteur gravitationnel
fig. 20 Palier de frottement
fig. 21 Palier à faible frottement
fig. 22 Disque oscillant
fig. 23 Un appareil de mesure de niveau électronique
fig. 24 Schéma bloc d'un compteur kilométrique
fig. 25 Encodeur

La source lumineuse est la partie qui consomme le plus de courant. Il devient intéressant de bien utilisé cette énergie.

Un élément récepteur correspondant à une diode intégrée dans une technique CMOS a une capacité interne qui définira la limite de fonctionnement en fonction du courant émis par l'élément récepteur et du niveau de courant pouvant être utilisé par le circuit de détection. Cette capacité définira aussi le seuil minimum de luminosité requise et/on la vitesse maximale de déplacement du support par rapport à un élément récepteur. La valeur de capacité de la diode dépend principalement de sa propre surface, mais aussi de la technique de fabrication utilisée.

Le fait de focaliser le flux lumineux permet d'élever le niveau l'énergie lumineuse par unité de surface reçue, de réduire la surface et la capacité parasite de l'élément récepteur.

L'utilisation d'éléments optiques de petites dimensions permet de réduire la dimension du capteur dans le sens axial. Pour un même rapport entre la distance séparant la source lumineuse et l'élément optique et la largeur de l'élément optique correspond une même intensité du flux lumineux utile à la détection.

L'utilisation d'éléments optiques de petites dimensions permet aussi de réduire la dimension des éléments récepteurs permettant une intégration de la fonction de détection ou de lecture sur un même support ou puce.

La fabrication des éléments optiques ou de la graduation peut se faire par usinage par faisceau d'électrons. Une table X-Y d'une résolution de l'ordre du nano-mètre permet de façonner des éléments optiques en qualité optimale sur la base de données binaires caractérisant la forme géométrique de l'élément optique.

Un point ou une section d'un faisceau d'électrons est déplacé sur la pièce à usiner selon les axes X-Y. L'axe Z est obtenu par modulation de l'intensité du flux d'électrons. Cette méthode permet d'usiner par enlèvement ou modification de la matière différents matériaux tel que polymères, en particulier du polycarbonate, du quartz, des aciers pouvant servir au façonnage d'outillages plastiques ou autres matériaux. Lors de l'emploi d'un original en polymère un duplicat de forme se fera par dépôt electrolytique de Nickel ou autres alliages. La pièce ainsi obtenue sera par exemple placée dans un moule d'injection plastique. Ce procédé permet de réaliser des graduations aux formes diverses telles que décritent dans ce document.

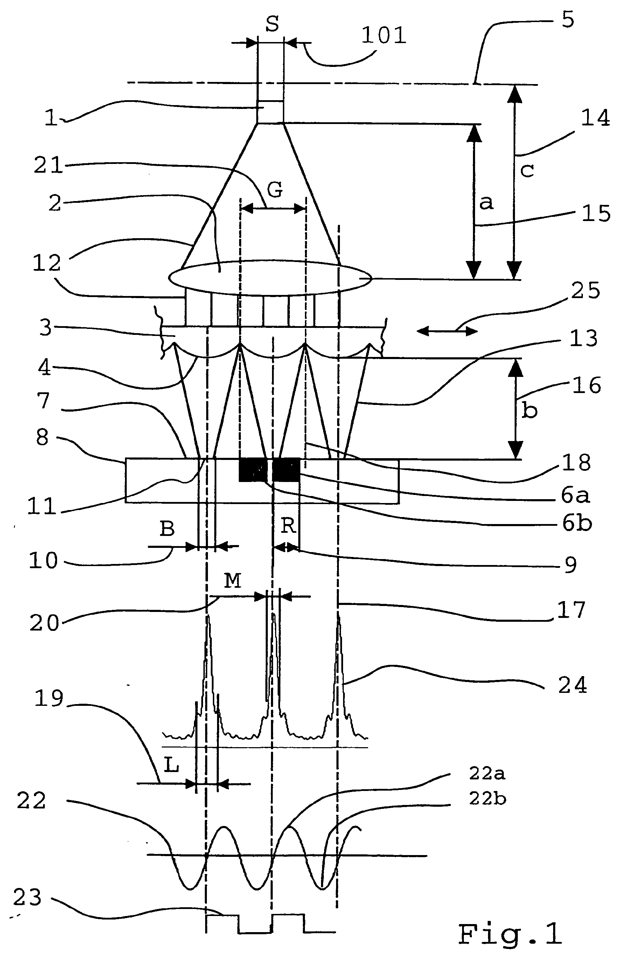

La Fig 1 représente une disposition des différents éléments pouvant faire partie du dispositif, qui sont représentés de façon schématique selon une coupe, soit une source de lumière 1 de largeur, dimension ou section S 101, une lentille ou un dispositif optique 2 permettant de mieux moduler la direction du flux lumineux représenté schématiquement par 13, une coupe du support de graduation 3 comportant une suite d'éléments optiques de forme cylindrique 4 de largeur G21 contenant une portion focalisante permettant de focaliser le rayonnement lumineux représenté par les lignes 12 et 13 sur le plan d'image 7 en un point nommé spot lumineux 11 de dimension B 10. Les éléments sensibles à la lumière 6a et 6b de largeur ou dimension R 9 faisant corps avec le support 8. Les lignes 18 représentent les abords de division. Les lignes 17 représente l'axe géométrique de la division, qui correspond ici à l'axe optique des éléments optiques 4. Le support de graduation 3 peut se déplacer horizontalement selon la flèche 25 par rapport aux éléments récepteurs 6. Les dimensions c 14, a 15 et b 16 permet de décrire la position des éléments par rapport à la graduation, et de définir le plan final représenté par une ligne traitillée 5, qui correspond à une ligne au delà de laquelle il n'est plus possible de diminuer la dimension de l'image portée sur le plan d'image 7. La courbe 24 représente la distribution de l'intensité lumineuse sur le plan d'image 7. Elle est caractérisée par les deux dimensions M 20 et L 19. L'image du signal électrique obtenu par le déplacement 25 du support de graduation 3 par rapport au support 8 est représentée en 22, le maxima en 22a et le minima en 22b. A une position centrée du spot lumineux 11 par rapport à un élément récepteur 6 peut correspondre une valeur de signal maxima 22a ou minima 22b. Ce signal pourra être converti en un signal digital et/ou analogique 23. A une valeur logique du signal digital 23 peut correspondre un signal de position.

La source de lumière 1 sera de préférence une diode de forme allongée représentée ici en coupe. Une largeur de 20 à 200 $\mu$m peut être représentative du dispositif. Elle peut correspondre à une source laser ou autres, qui émet dans le domaine des UV, de lumière visible, de l'infrarouge ou autres. La dispositif optique 2 permet de rendre parallèle la direction du flux lumineux traversant la graduation. Le dispositif peut aussi être réalisé sans le dispositif optique 2.

Le faisceau lumineux 13 défini par un élément optique 4 est focalisé sur le plan d'image 7, en un point, représenté par un spots lumineux 11. La largeur B 10 du spot lumineux 11 est inférieure à la projection de la section de l'élément optique 4 sur le plan d'image 7.

Les éléments récepteurs convertisseurs d'énergie ou sensibles à la lumière 6 peuvent être des diodes compatibles avec la technologie CMOS de type P+/N ou autres, photo-transistors ou autres éléments permettant de convertir l'énergie fournie par la source lumineuse an un courant et/ou de faire varier les caractéristiques physiques des éléments récepteurs. Ils peuvent être placés sur un même plan géométrique et être intégrés sur le même support 8.

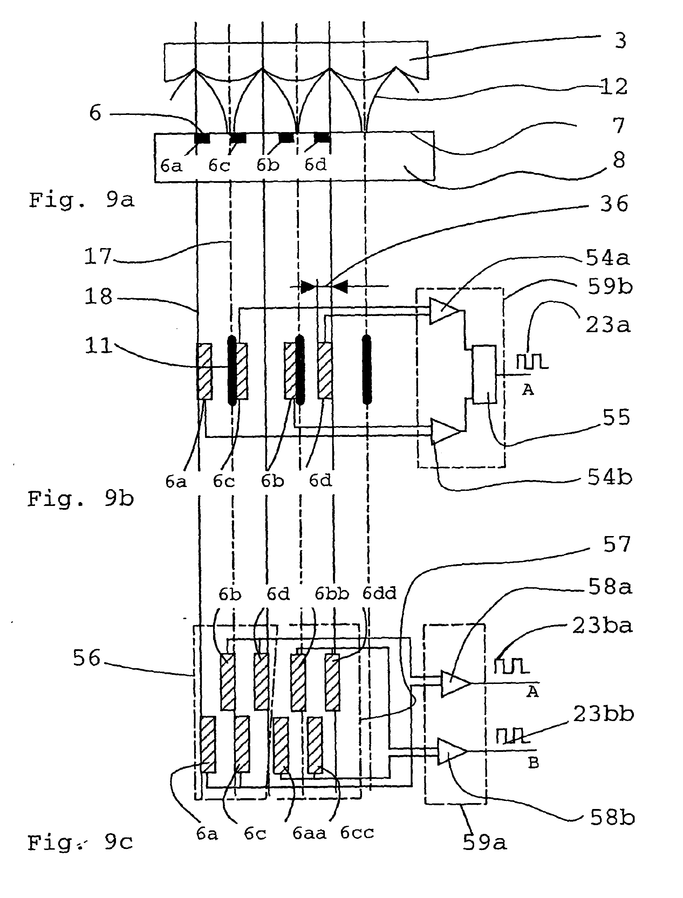

Un groupe d'éléments récepteurs est représenté par la combinaison des éléments récepteurs 6a et 6b ou dans le cas de la fig 9 6a et 6b ou 6c et 6d. Un groupe d'éléments récepteurs représente les éléments récepteurs permettant de former une alternance de signal 22. Un groupe d'éléments récepteurs peut aussi comprendre un seul élément récepteur combiné avec une valeur de référence qui, par exemple, est générée par le circuit. Dans ce cas l'élément récepteur fournira une demi-alternance de signal 22, duquel sera généré une demi-alternance de signal digital 23.

Une unité d'éléments récepteurs 56,57 (Fig 9) correspond à un ou plusieurs groupes d'éléments récepteurs permettant de former une ou plusieurs alternances de signal 22. Par convention le signal digital 23 provenant d'une première unité d'éléments récepteurs correspond à une sortie ou canal "A". Un deuxième signal provenant d'une deuxième unité d'éléments récepteurs produisant un signal de préférence identique et décaler de 1/4 d'alternance par rapport au signal 23 correspond à une sortie "B". L'évaluation ultérieure des canaux "A" et "B" permet de détecter le sens de déplacement du support de graduation et d'augmenter la résolution unitaire du dispositif.

La dimension 10 du spot lumineux 11 qui est bien inférieure à la longueur de division 23 permet d'augmenter la résolution unitaire du dispositif.

Le support 8 peut représenter une puce ou un support de circuit intégré de silicium à laquelle sont intégrés les éléments récepteurs et de préférence le circuit de détection. Le circuit de détection permet de convertir les courants émis par les éléments récepteurs en signaux et/ou informations utilisables par d'autres dispositifs électroniques. A une graduation peut correspondre plusieurs support 3.

Par définition la graduation est une suite d'éléments optiques comprenant une portion focalisante, qui focalise la lumière en un endroit du support 8. Si à un élément optique correspond deux spots lumineux, il s'agira par définition de deux graduations, qui peuvent être confondues, ou deux divisions différentes.

La cote S, 101 représente la largeur de la source lumineuse 1. La cote B,10 représente la largueur utile du spot lumineux sur le plan d'image 7. La cote a,15 représente la distance entre la source lumineuse et/ou l'objet lumière 1 et le dispositif optique 2, qui correspond de préférence à la distance focale du dispositif optique 2. La cote c,14 représente la distance entre le plan final 5 et le dispositif optique 2. La cote b,16 pouvant être égale à la distance focale f représente la distance entre les éléments focalisants 4 et le plan d'image 6. La cote G,21 représente la longueur de division ou la largeur de l'élément focalisants 4. La cote R,9 représente la largeur et/ou la largeur moyenne de l'élément récepteur 6. La cote L, 19 représente la dimension minimale de premier ordre correspondant à la résolution optique maximale de l'élément focalisant. La cote M, 20 représente la largeur utile du signal lumineux, qui correspond à une concentration énergétique relative maximale par rapport au reste du signal lumineux obtenu. Par exemple, la largeur utile permet de dimensionner la source lumineuse 1.

La relation entre la largeur du spot lumineux 10 et la largeur de la source de lumière 1 est donnée par la formule S/B = a/b. La largeur du spot lumineux minimale est représentés par la formule Lmin = c1 * Lambda * b / E, c1 a une valeur de 2,22 et correspond au deuxiéme maxima d'intensité luminese, Lambda représente la longueur d'onde de la lumière, b la distance focale et E la largeur de l'élément focalisant 4. La valeur de c 14, qui est valeur limite, peut être exprimée par la relation suivante c = M/L * S * E / (c1 * Lambda). Pour une valeur de a > c la largeur L ou M restera constante. Pour une valeur de a < c la largeur du spot lumineux variera en fonction du rapport des valeurs a et c. En faisant varier la distance a dans le domaine a < c , il devient possible de faire varier la largeur M et d'agir sur le rapport R/M et aussi sur la forme du signal électrique 22.

Il en ressort des réflexions faites ci-dessus que le choix de la distance focale de l'éléments focalisants 4 est déterminant pour un rendement énergétique optimal. A une petite distance focale correspond une valeur L ou M minimale ce qui permet pour une largeur de la source lumineuse S et une largeur de l'élément récepteur R données de rapprocher la source lumineuse S du support de graduation, donc de capter le plus d'énergie lumineuse possible provenant de la source de lumière. Il en ressort aussi qu'il est plus avantageux d'utiliser une source de lumière 1 travaillant par exemple dans le bleu ou le vert que dans l'infrarouge, la dimension critique Lmin étant moindre.

La distance entre le dispositif optique 2 et le support de graduation 3 joue un rôle secondaire. Sans le dispositif optique 2, les cotes 15 et 14 auront comme origine l'élément focalisant 4 et les axes optiques seront convergents vers la source lumineuse 1. Il en résulte une distribution faussée des spots lumineux 11 sur le plan d'image 7.

Le plan d'image 7 peut correspondre au plan focal des éléments focalisants 4,31. La pratique démontre que le plan d'image optimal se situe à une distance égale à 1 à 1.2 * la distance focale des éléments focalisants.

Le plan d'image 7 peut aussi correspondre à un plan plus éloigné avec des maxima d'illumination obtenus par superposition des effets dûs aux lois de l'optique géométrique et de l'optique diffractionnelle.

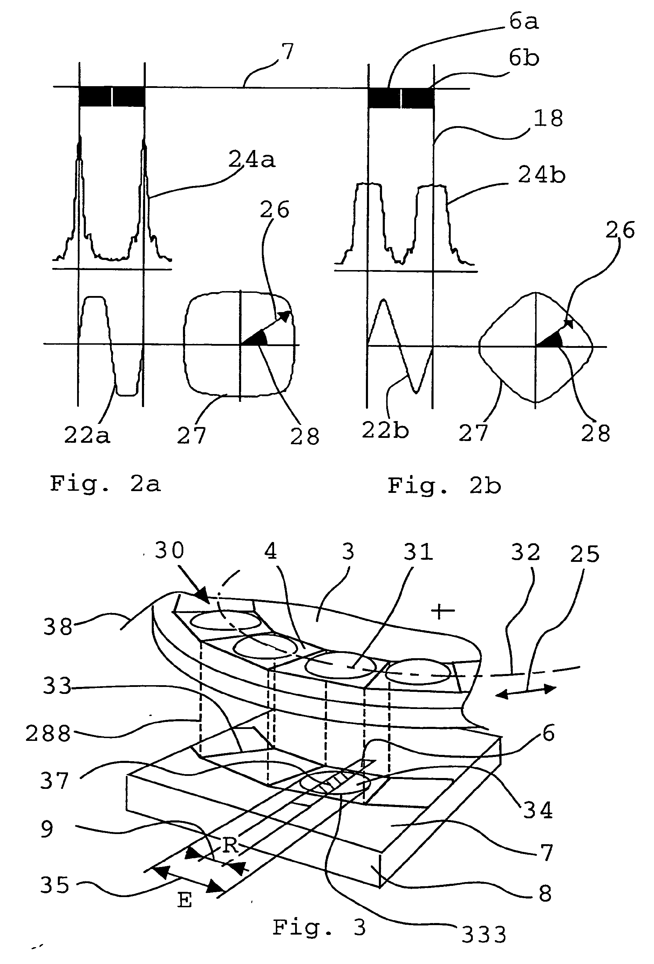

La figure 2a et 2b permet de visualiser l'importance du rapport R/M

en démontrant côte à côte deux situations extrèmes, en fig 2a lorsque ce rapport "R/M > 1" et en fig 2b "R/M < 1". Une paire d'éléments récepteurs 6a et 6b sont représentés sur le plan d'image 7. Ils recoivent un signal d'intensité lumineuse selon 24 et génèrent à l'aide d'un circuit non représenté un signal électrique 22. Par exemple l'élément récepteur 6a produit un courant correspondant à une valeur positive en fonction de l'illumination reçue et l'élément récepteur 6b produit un courant de valeur négative en fonction de l'illumination reçue. La différence des valeurs ainsi générée, qui peut aussi correspondre à la différence des courants émis par les deux éléments récepteurs, correspond à une valeur de signal 22 variant periodiquement en fonction du déplacement du support de graduation 3.

Par l'application d'un deuxième groupe d'éléments récepteurs décalés de 1/4 de division, il sera possible de générer deux signaux correspondant à un sinus et un cosinus. Le report de ces deux signaux sur un plan ortogonal permet de définir un vecteur 26 dont la valeur variera selon la courbe 27 lors du déplacement du support de graduation selon 25. La valeur de l'angle du vecteur est représentée par 28.

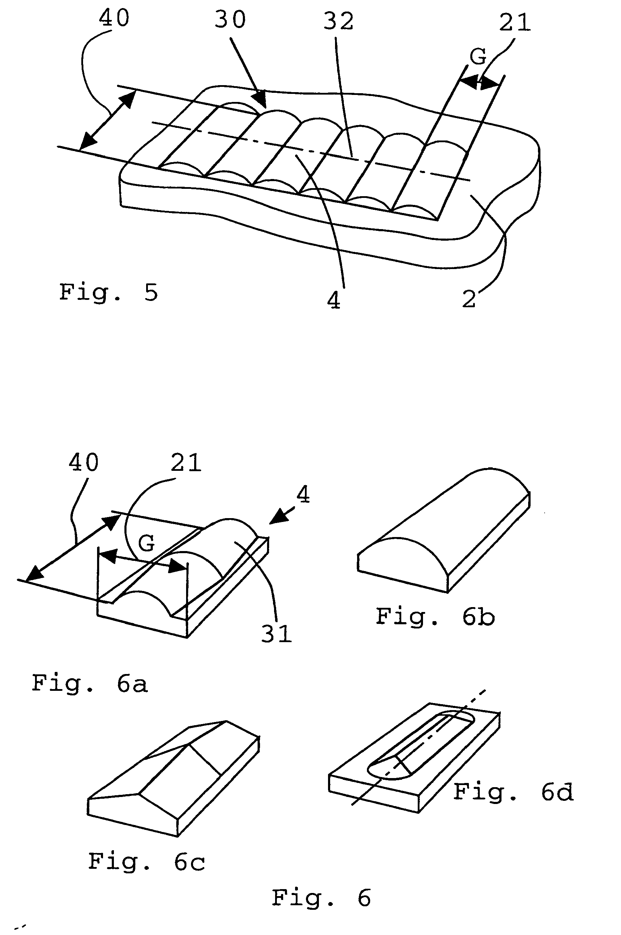

Pour un rapport R/M > 1 la forme de la courbe 27 s'approchera d'un carré selon la fig 2.a, pour un rapport R/M < 1 d'un losange selon la fig 6b et pour un rapport R/M = 1 d'un cercle (non représenté).

La forme stable de la courbe dépendra de facteurs mécaniques et géométrique du dispositif ainsi que de la qualité de fonctionnement des diodes réceptrices. Une courbe stable permet d'extraire la valeur de l'angle de position 28 avec plus ou moins de régularité.

La qualité de la forme de la courbe 27 qui optimalement correspond à un cercle permet de faire correspondre une mesure électrique avec une mesure de position exacte. Par exemple une courbe telle que représentée en fig 2a introduit des erreurs quand à la définition de la position géométrique.

Ces deux points de vue qualitatifs détermineront la capacité de résolution réelle du système de mesure qui pourra être supérieure à la résolution unitaire du dispositif de valeur, couramment d'une valeur 4 à 256 fois plus élevée.

Le rapport M/R dépend du rapport a/c étant caractérisé par la forme et la dimension de la source lumineuse 1. La relation entre a et c sera de $a/c \leq 1$. A $a/c > 1$ correspond une largeur d'image inchangée et une perte d'énergie lumineuse, du fait que l'angle d'ouverture de l'élément focalisant est inutilement réduit.

La figure 3 représente une vue en trois dimensions d'une des dispositions préférentielles des éléments du dispositif, soit une représentation partielle du support de graduation 3 limitée par la ligne 38, une graduation 30 formée d'une suite d'éléments optiques 4 alignés selon la ligne directrice ou médiane 32 de la graduation et comprenant une portion focalisante 31, un plan d'image 7 correspondant à la surface du support 8 contenant les éléments récepteurs 6 de largeur 9.

Les lignes 33 représente le périmètre de la projection de la surface d'un éléments optiques 2 sur le plan d'image 7 selon les lignes 288, la section 34 délimitée par le périmètre 333, la projection de la partie focalisante 31 de largeur 35 et la surface d'intersection 37 l'intersection entre la surface 34 et la surface de l'élément récepteur 6 de largeur 9. La largeur 35 de la projection de la portion focalisante 31 sera plus grande que la largeur 9 de l'élément récepteur 6 pour que le signal 22 puisse être conditionner dans la forme souhaitée.

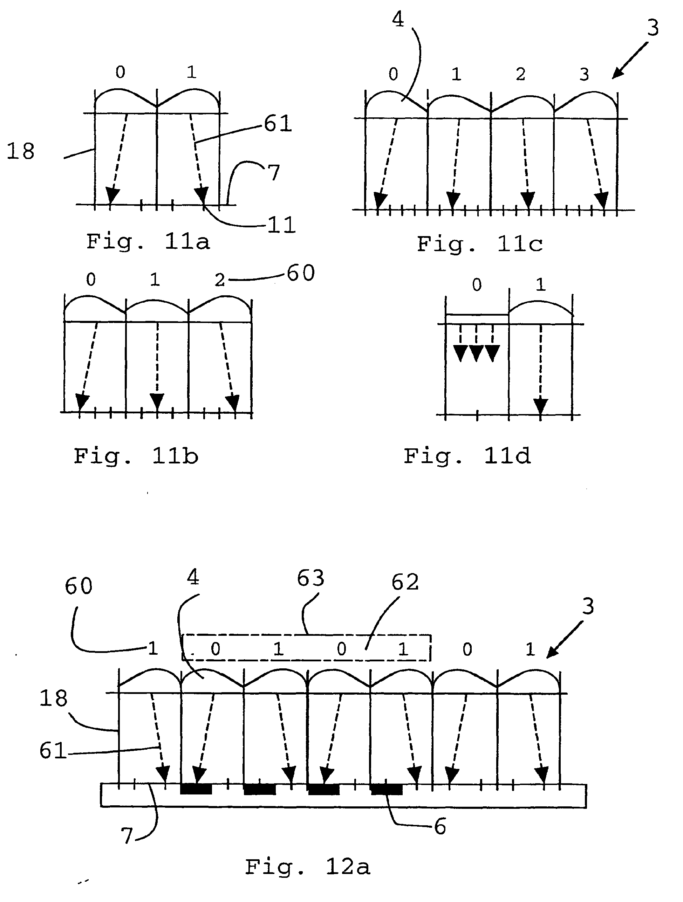

L'élément récepteur 6 peut être orienté de façon perpendiculaire par rapport à la ligne médiane 32. Il sera de préférence de forme oblongue ou principalement rectangulaire, ce qui permet, pour une même technique de fabrication, d'augmenter le niveau d'énergie lumineuse convertible par unité de largeur 9 de l'élément récepteur 6 et/ou d'augmenter la résolution du dispositif pour un même taux d'énergie lumineuse. La largeur de l'élément récepteur peut être de $2\mu m$ ou plus. De préférence le total de la valeur de la largeur de chaque élément récepteur appartenant à une même division est égale ou plus petite que la valeur de la longueur de la division. Une autre conception possible de l'élément récepteur est décrite en fig 11d.

Une forme principalement rectangulaire se comprend comme être une surface pouvant facilement se superposer à un rectangle ou qui dans le sens de la largeur 9 comprend au moins deux côtés de forme quelconque parallèles ou parallèlement convergentes vers le centre de courbure de la ligne médiane 32 et dans la largeur de deux côtés de forme quelconque.

La fig 4a-4d représente une comparaison entre les techniques de l'art connu et de l'invention se basant sur le fait que chaque dispositif à une même résolution unitaire et que le flux lumineux est identique. Ce raisonnement est aussi valable pour des lentilles de formes cylindriques ou sphériques. Les fig 4a, 4b et 4c représentent la disposition du support de graduation pour différentes technologies et deux représentations schématiques de la positions de l'élément optique 4 disposées à une distance égale à 1/4 de division unitaire.

La fig 4a représente l'invention. L'état de la technique est représenté en fig. 4b pour Kawamura et en fig. 4c pour Leonard. La lentille de la fig 4a recouvre une surface égale à quatre largeurs de diode. Une valeur supérieure à 4 diodes serait aussi possible puisque la dimension du spot lumineux peu facilement être diminuée jusqu'à des valeurs limites égales à approximativement M = 4 * Lambda * f / E.

Les fig. 4d représente la forme et la valeur de l'intensité du courant remis par l'élément récepteur. La courbe 39a ici de forme trapézoïdale, ce qui est dû à la dimension réduite du spot lumineux, représente la valeur d'intensité pour la fig 4a, la courbe 39b et 39 c la valeur d'intensité pour la fig 4b, la courbe 39d la valeur d'intensité pour la fig. 4c. L'intensité du signal pour la fig 4a, 39a correpond à une valeur de 4, pour la figure 4b pour 39b de 1 et pour 39c de environ 0.8, pour la fig 4c de 1.

Les différences de forme de la courbe 39b et 39c donne une idée de ce que peut représenter la détérioration du signal dû à la largeur du spot lumineux. Le rapport de la largeur du spot lumineux par rapport à la largeur de division est égal à approximativement: B/R = 2.22 * Lambda * f/E*E par exemple pour une valeur E = $20\mu m$ et f = $80\mu m$ le recouvrement est égal à 30% ce qui correspond approximativement à la courbe 39c. La forme de cette courbe laisse entrevoir que le dispositif prévu pour une augmentation de la résolution par évaluation du signal électrique produit ne pourra pas être appliquée dans le cas de la courbe 39c.

Il faut remarquer que la grandeur du signal alternatif généré par la combinaison des deux éléments récepteurs 6a et 6b permet d'atteindre une hauteur d'alternance d'intensité:

- d'un facteur 8 pour la fig 4a
- d'un facteur 1 pour la fig 4b sous condition optimale
- d'un facteur 2 pour la fig 4c

Il en ressort clairement que, à résolution unitaire égale, la solution de l'invention assure un signal de valeur bien supérieur par rapport à l'état de la technique. Il faut toutefois noter que la forme des courbes 39 dépend aussi de la qualité des zones d'ombres. La courbe 24 de la fig 1 représente une mesure réelle sur une lentille de 16μm et donne une idée des rapports d'illumination rencontrés.

Les formules utilisées pour le calcul des dimensions du spot lumineux ne prend pas en compte les effets de grilles. L'expérience a montré que ces valeurs était correctes.

Les fig. 5, 6a-6d représentent différentes formes d' exécution de l'élément foptique. La fig. 5 représente une partie d'un support de graduation 5 comportant une graduation 30 formée d'une suite d'éléments optiques ou divisions 4, dont la portion focalisante 31 est faite d'éléments optiques cylindriques de largeur 21 et longueur 40 confondus à la division 4, qui peuvent être alignés perpendiculairement à la ligne médiane 32. les lentilles auront par exemple une largeur E 35 de 8μm ou plus, une distance focale d'une valeur située entre 2*E et 6*E et une longueur située entre 50 et 600μm. Elles correspondent à une portion focalisante linéaire ou essentiellement linéaire.

Les éléments optiques 4 ou les parties focalisantes 31 peuvent être fait de même matériel, de préférence en matière plastique ce qui permet de fabriquer le support de graduation en même temps que les éléments optiques, soit par exemple par injection. Il est aussi possible de former la graduation par pression d'un outillage sur une ébauche du support de graduation. Plusieurs matériaux peuvent aussi entrer dans la conception du support de graduation.

Un support de graduation 3 peut être de formes diverses et peut comprendre des éléments géométriques pour faciliter son assemblage sur le dispositif. Un même support de graduation 2 peut comporter une ou plusieurs graduation 30 comprenant des éléments optiques identiques ou de types différents. La ligne médiane 32 peut être un cercle. Elle peut correspondre à la direction de déplacement du support de graduation en un point donné.

La fig. 6 6a-6d représente diverses conceptions possibles de l'élément optique 4 de largeur 21 et de longueur 40 qui peut comprendre une portion focalisante 31 qui génère une répartition irrégulière de l'intensité lumineuse sur le plan d'image 7 de telle sorte que la partie correspondant à une intensité élevée peut être définie par un lumineux 11 qui de préférence recouvreront une surface de forme oblongue et/ou principalement rectangulaire du plan d'image 7. Elle correspond à une portion focalisante essentiellement linéaire.

La projection de la portion focalisante 31 sur le support de graduation 3 peut être de forme oblongue et/ou principalement rectangulaire.

Une répartition linéaire des spots lumineux permet de distribuer de façon optimale ou sélective le flux lumineux sur les éléments récepteurs 6.

La fig 6a représente un élément optique 4 de largeur 21 et de longueur 40 comportant une portion focalisante 31 de forme biconique formée de volume conique dont la valeur focale sera différentes d'un point à l'autre de la division, la fig 6b de forme cylindrique recouvrant de part en part l'élément optique 4, la fig 6c de forme de pyramide à quatre pans recouvrant de part en part l'élément optique 4, la figure 6d de forme de pyramide avec des embouts arrondis couvrant seulement une partie de l'élément optique 4.

Les surfaces cylindriques ou de forme pyramidale peuvent représenter une forme géométrique approchante ou une forme asymétrique mieux adaptées aux caractéristiques optiques désirées. Dans le cas d'une graduation circulaire cette forme sera convergeante vers le centre de courbure de la graduation, dans le cadre d'une division à valeur numérique cette forme sera asymétrique par rapport à l'axe optique 17.

Une forme pyramidale peut comprendre deux faces bombées qui permet par rapport à une forme cylindrique de réaliser un spot lumineux, dont le changement de dimensions sera moins sensible aux variations de la distance entre le support 8 et le support de graduation 3.

La possibilité de bomber la forme d'une lentille par exemple de forme cylindrique dans le sens de la longueur donne une possibilité supplémentaire de concentrer plus d'énergie dans le spot lumineux ou de réduire la longueur du spot lumineux par rapport à la longueur 40 de l'élément optique.

Les exemples ci-dessus peuvent aussi correspondre à une lentille de type Frensel, binaire et/ou diffractionnelle. Les lentilles de type binaire ont le désavantage en ce que ce type de lentilles a des propriété à la fois convergentes et divergentes, ce qui remet l'intensité lumineuse au point focal à une valeur de 50% par rapport à celle obtenue avec une lentille géométrique. Les lentilles de type purement diffractionnelles représentent une autre possibilité d'exécution.

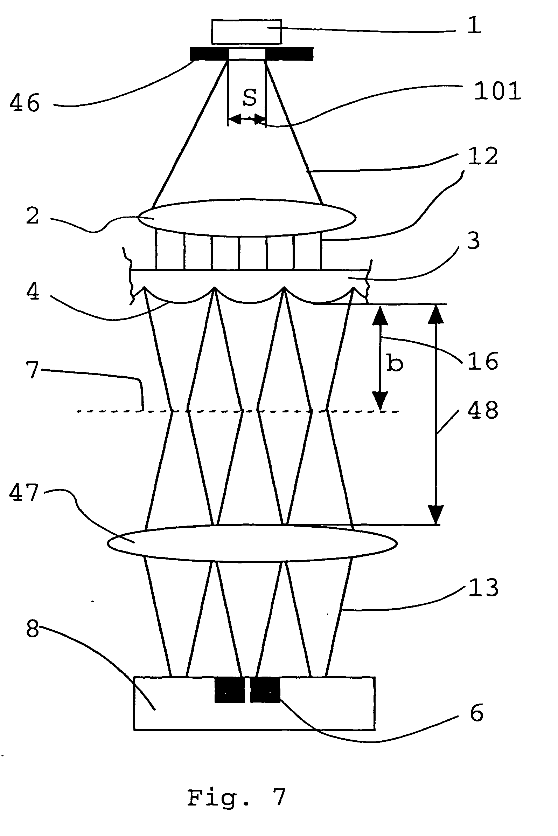

La fig 7 représente une disposition spéciale du dispositif. La source de lumière 1 correspond schématiquement à une diode 1 devant laquelle est placé un masque opaque 46 permettant de définir la dimension S 101 de la source ou de l'objet lumineux. Le rayons lumineux 13 sont dirigés par un dispositif optique 2 sur le support de graduation 3.

La configuration du système de réception comprend un dispositif optique 47 permettant de projeter le plan d'image 7 sur le plan du support 8 comprenant les éléments récepteurs 6 placés à plus grande distance du support de graduation 3. Cet arrangement permet de construire un dispositif dont l'espacement mécanique 48 est plus élevé que la distance b 16, qui peut correspondre à la longueur focale de l'élément optique 4.

Les éléments mécaniques peuvent être mieux disposés. Une distance focale minimale peut être choisie pour un meilleur rendement lumineux, la dimension S 101 de la source lumineuse pouvant être plus élevée.

Le dispositif optique 47 peut être formé d'une ou plusieurs lentilles dont le plan optique sera de préférence

**EP 0 781 398 B1**

situé entre le plan d'image 7 et le support 8. Il peut aussi être fait d'un élément permettant de rendre sur le support 8 un spot lumineux générés par une graduation convergentes, telle que rencontrée dans les encodeurs rotatifs, en une suite de spot lumineux 11 parallèles. Il peut être réalisé par injection plastique. Il permet d'adapter de manière peu coûteuse un circuit intégré à une graduation de géométrie différente.

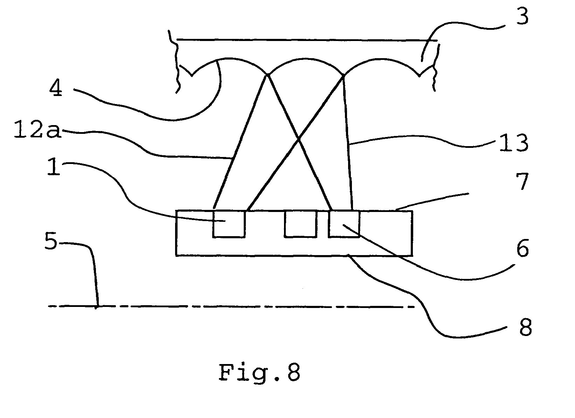

La fig. 8 représente une forme d'exécution pour un dispositif fonctionnant par réflexion, comprenant un support de graduation 3, un élément focalisant réfléchissant 4, une source de lumière 1 et des éléments récepteurs 6. Les lignes 12 et 13 représentent l'enveloppe du flux lumineux utile. Le plan final 5 est situé derrière le plan d'image 7 qui dans cet exemple contient aussi bien la source lumineuse 1 que les éléments récepteurs 6.

Un dispositif fonctionnant par réflexion est mieux approprié pour des applications à hautes températures. Le polycarbonate par exemple perd toutes ces qualités de transparences optiques sous températures élevées. L'emploi de par exemple un support de graduation en aluminium détourne ces inconvénients. En outre il est plus facile de monter la source lumineuse 1 solidairement avec les éléments récepteurs 6.

La fig 9 9a-9c représente la disposition des éléments récepteurs sur le support 8 correspondant au plan d'image 7 et une représentation simpifiée du circuit de détection pour la réalisation d'un dispositif de mesure incrémental, dont la résolution unitaire est deux fois plus élevée que la résolution de graduation.

La fig. 9a représente de manière schématique une coupe du support de graduation 3, du plan d'image 7, des éléments récepteurs 6, du flux lumineux 13. Les lignes 17 représentent l'axe optique ou de la division et les lignes 18 les limites de la division.

Les éléments récepteurs forment deux groupes d'éléments récepteurs 6a/6b et 6c/6d se rapportant à une même division et qui seront disposés géométriquement selon la projection de au moins deux divisions 18 sur le plan d'image 7. Un espacement suffisant entre les éléments récepteurs doit être respecté pour éviter toute forme d'interraction de fonctionnement entre les éléments voisins. Par exemple à une largeur de diode de $4\mu$m devra correspondre une distance minimale entre deux éléments de $3\mu$m.

La fig. 9b représente la disposition des éléments récepteurs 6a, 6b, 6c et 6d selon la fig 9a, les spots lumineux 11 et un circuit de détection 54a et 54b conditionnant un signal digital 23a pouvant correspondre à un canal "A". Les éléments récepteur 6a, 6b, 6c et 6d représente une unité d'éléments récepteurs. Un premier groupe d'éléments récepteurs 6a/6b est relié au circuit 54a et un deuxième groupe 6c/6d au circuit 54b. Les circuits 54a et 54b conditionnent les signaux d'une alternance qui sont ajoutés ou combinés en 55 pour fournir le signal digital 23a. La conversion du signal analogique en un signal digital peut se faire par les circuits 54 et/ou 55. Le circuit de détection est défini par 59b.

La fig. 9c représente une autre configuration d'éléments récepteurs comprenant une unité d'éléments récepteurs 56 comprenant les éléments 6a,6b,6c et 6d et une unité d'éléments récepteurs 57 compenant les éléments 6aa, 6bb, 6cc et 6dd. Chaque unité comprend deux groupes d'éléments récepteurs. La distance entre les deux unités sera d'une valeur égale à 1/8 de la longueur 21 de la division.

Le circuit de détection 59c comprend les circuits d'évaluations 58a,58b qui conditionne un signal de sortie digital 23ba,23bb représentant les canaux "A" et "B" à partir du courant émis par deux paires de diodes. Il peut aussi contenir un résolveur, non représenté, permettant de multiplier la résolution du système sur la base d'un signal sinus provenant de 58a et d'un signal cosinus provenant de 58b et de fournir les signaux digitaux 23ba et 23bb.

La disposition du circuit de détection 54 de la figure 9b fait une mesure différentielle individuelle par groupes d'éléments récepteurs. Le circuit de détection 58 de la figure 9c fait une mesure différentielle du courant émis par chaque unité d'éléments récepteurs comprenant deux groupes d'éléments récepteurs. D'autres dispositions sont possibles.

La disposition des éléments récepteurs représentés en fig.9b à l'avantage de correspondre à une largeur de spot lumineux 11 pouvant être égale à la longueur de l'élément récepteur. L'addition d'une deuxième unité d'éléments récepteurs peut se faire par la répartition des éléments récepteurs selon quatre divisions dans une même rangée. Elle peut aussi se faire sur plusieurs rangées.

La disposition des éléments récepteurs représenté en fig 9c fait apparaître une unité d'éléments récepteurs par division, ce qui demande une disposition sur deux rangées des éléments récepteurs. La disposition des éléments récepteurs sur une rangée répartie sous plusieurs divisions correspond à un meilleur rendement lumineux du dispositif.

La fig. 10a fait référence à une autre disposition des éléments récepteurs, qui dans le sens de l'invention correspond à une alternative d'exécution intéressante. La forme du signal électrique provenant des éléments récepteurs est caractérisée par la forme et la disposition géométrique des diodes 6a et 6b, ainsi que par la largeur B,10 du spot lumineux.

Les diodes correspondant à une même division, soit 6a et 6b, peuvent être placées côte à côte ou en série réparties sur plusieurs divisions. La forme géométrique des deux diode varie périodiquement en fonction de la longueur de la division 21. Lors du déplacement des spots lumineux 11 selon la ligne médiane 32, ceux-ci recouvreront, au moins sur une partie de la division, les deux diodes 6a et 6b simultanément et les deux surfaces délimitées par l'intersection du spot lumineux et de chacune des diodes 6a et 6b devra varié substentiellement pour généré un signal alternatif utilisable 22.

A une largeur de spot lumineux B,10 minimale correspond une reproduction fidèle de la forme des diodes, qui en quelque sorte est imprimée dans le silicium.

La fig 10b montre une forme d'exécution permettant de générer des signaux en forme de sinus, la fig 10c en forme de sinus rapprochée et la fig 10d en forme de dents de scie 10c. Cette dernière exécution combinée à une graduation faite de lentilles cylindriques juxtaposées permettrait d'améliorer le capteur décrit par Kawamura.

La fig 11a-11d représente de manière schématique une coupe du support de graduation 3, plusieurs éléments optiques ou divisions 4 de types différents auquels sont attribués une valeur numérique 60, le plan d'image 7 et les lignes de divisions 18. La direction du flux lumineux est représentée schématiquement par la flèche 61 dirigée sur l'emplacement du spot lumineux 11.

Les éléments optiques 4 sont de formes et de caractéristiques optiques différentes, auxquelles correspond une forme et/ou une position du spot lumineux 11 par rapport au plan d'image 7 ou au périmètre 33 qui sont différentes d'une division à l'autre et peuvent être détectées par les éléments récepteurs 6.

La fig. 11a représente de manière schématique une portion de graduation 3 comprenant deux types d'éléments optiques aux propriétés optiques différentes représentées par 61 auxquelles correspond une valeur numérique binaire 27. Il en est de même des fig. 11b et 11c qui représentent une graduation comprenant une valeur à base de quatre, respectivement de trois.

La fig. 11d représente une variante de graduation faite de deux type d'éléments optiques comprenant une portion focalisante symétrique et un élément optique sans portion focalisante, qui peut représenter une section transparente, opaque ou réfléchissante. La différence de l'intensité lumineuse sur le plan d'image 7 permet de reconnaître par l'intermédiaire d'un groupe d'éléments récepteurs 6 le type de division en présence. La valeur 60 peut être de base binaire.

Une graduation peut contenir un nombre quelconque de type d'éléments optiques différents. Ce nombre correspond à la base mathématique de la valeur numérique 60. Il est limité par des considérations de conception et de tolérances de fabrication.

La fig. 12a représente de manière schématique la coupe d'un support de graduation 3, des éléments optiques 4 asymétriques de valeur binaire 60, du plan d'image 7 où sont disposés sur la projection de quatre divisions quatre éléments récepteurs représentés par 6. Les lignes 18 représentent les bords de la division et les flèches 61 de façon schématique la direction du flux lumineux.

La capabilité de détection de cette disposition correspond aus quatre valeurs numériques encadrées par la ligne traitillée 63 qui correspond à un chiffre de position 62, qui peut être détecté par les éléments récepteurs 6, qui peuvent aussi correspondre à un groupe ou à une unité d'éléments récepteurs.

Le chiffre de position 62 peut caractérisé la position du support de graduation 3 par rapport au support 8. La longueur du chiffre de position 62 peut être quelconque et dépend du nombre de divisions analysées par les éléments récepteurs sur le plan d'image 7. Les divisions analysées peuvent correspondre à une ou plusieurs graduations.

La fig 12b représente la procédure mathématique permettant de réaliser un dispositif de mesure absolu par l'utilisation d'une seule graduation comprenant deux types de division. La disposition des divisions par valeur numérique de graduation est représenté en 64. Le cadre 63 va faire apparaître un chiffre de position 62 de 4 bits en se déplacant de haut en bas, qui prendra pour chaque position du cadre une valeur différente indiquée par la flèche, comme représenté dans la colonne 65. La même procédure sera appliquée pour un chiffre de position comprenant un autre nombre de bits.

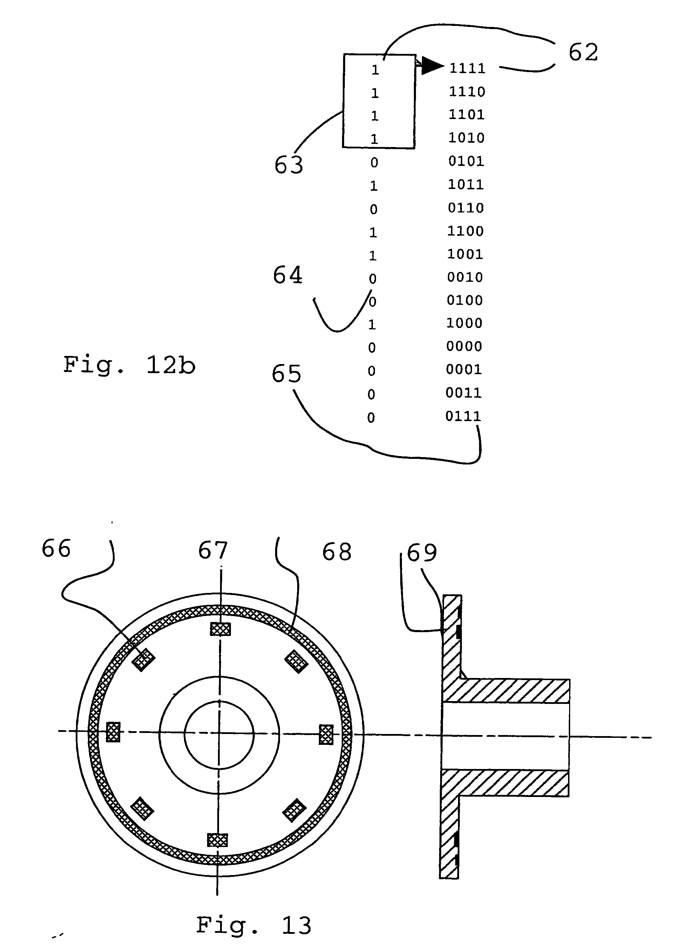

La fig. 13a et 13b représente un support de graduation fait d'une flasque 68 et d'un moyeux 69. La flasque comprend une graduation 67 faite de préférence d'éléments optiques identiques et une deuxième graduation faite de segments de graduation 66, pouvant faire fonction d'indexe. Chaque segment peut comprendre un ou plusieurs éléments optiques. Une disposition préférée conciste à placer plusieurs types d'éléments optiques, de telle façon que à chaque segment correspond un chiffre de position 62. Chaque segment comporte de préférence un code de référence.

Un code de référence conciste en une graduation comprenant plusieurs types d'éléments optiques dont une partie est de conception caractéristique, qui peut assurer une base pour la lecture du chiffre de position 62. Il peut s'agir d'une combinaison de type d'éléments optiques particuliers. L'emploi d'un chiffre de position à base deux ou trois permet de réaliser un tel code de référence de manière simple, réservant par exemple une digite comme point de référence, qui apparaît dans le chiffre de position 62. Le code de référence peut être disposé en ligne ou sur une graduations distingtes.

L'avantage de ce dipositif et de réaliser des encodeur quasi absolu permettant une lecture rapide d'un point de référence.

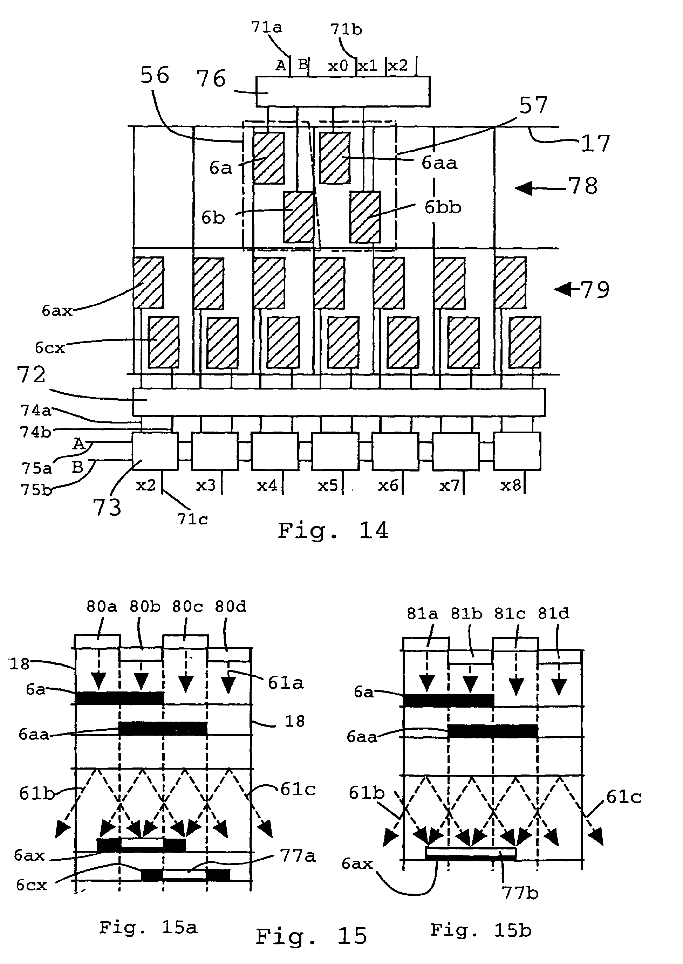

La fig.14 représente la disposition possible des éléments récepteurs et la conception du circuit de détection pour la réalisation d'un dispositif de mesure absolu à 9 bits de résolution. Le dispositif comporte une graduation 78, qui est faite d'éléments optiques identiques, et une graduation 79, qui est faite d'éléments optiques différents. Les graduations sont représentées par les lignes 18, qui représente leur projection sur le support 8, un circuit de détection représenté par les éléments 76,72 et 73 pouvant comprendre une ou plusieurs zones mémoire, les connections de sorties par 71a, 71b et 71c et les connections internes au circuit de détection par 74a, 74b, 75a et 75b. La valeur du signal de position des connections de sortie 71b et 71c correspond aux digites x0,x1,x2,x3,x4,x5,x6, x7 et x9 du chiffre de positionnement 62.

La première graduation 78 est faites d'éléments optiques identiques. Une première unité d'éléments récepteurs 56 comprend un groupe d'éléments récepteurs comportant deux éléments récepteurs 6a et 6b. Une deuxième unité d'éléments récepteurs 57, décalée par rapport à la première unité d'une distance égale au 1/4 de la dimension d'une division, comprend un groupe d'éléments récepteurs comportant deux éléments récepteurs 6aa et 6bb.

La deuxième graduation 79 est faites d'une suite de divisions formée de deux types d'éléments optiques différents (fig 13a). Les éléments récepteurs sont répartis en un premier groupe de sept unités d'éléments récepteurs 6ax correspondant à sept divisions. Un deuxième groupe est formé de sept unités d'éléments récepteurs, qui sont décalés d'une distance égale au 1/4 de la dimension d'une division. Il est représenté par une suite d'éléments récepteurs 6bx.

Les éléments récepteurs des unités 56 et 57 sont reliés au circuit 76 qui conditionne à l'aide d'un résolveur les signaux digitaux correspondant aux canaux "A" et "B". Le circuit de détection conditionne les premières digites du chiffre de position 62, qui caractérisent la position du spot lumineux par rapport au élément récepteurs 6a, 6b, 6aa et 6bb. Dans cet exemple il s'agit des deux premières digite x0 et x1. Il peut d'agit de plusieurs digite en fonction du taux d'intégration du résolveur.

Chaque groupe d'éléments récepteurs 6ax et 6cx correspondant à une division est connecté au circuit 72 qui permet de localiser la position des spots lumineux. A chaque groupe d'éléments récepteurs correspond un premier signal de position 74a ou 74b conditionné par le circuit 72.

Les valeurs 74a et 74b sont reprises par le circuit 73. Chaque circuit 73 recoit les signaux 75a et 75b, qui peuvent correspondre aux signaux de sortie 71a ou à un signal de position qui permettent de détecter la position relative d'une division de la graduation 78 par rapport au support 8. Chaque circuit 73 permet de caractérisé par analyse logique la valeur numérique de la division sur la base des signaux de position 74a, 74b, 75a et 75b qui est représentée par un signal de position 62 sur la sortie 71c, selon l'exemple de la fig. 14. L'action du cicuit 73 permet de syncroniser la lecture des valeurs numériques correspondant à la graduation 79 à partir des signaux de positions correspondant à la graduation 78.

A chaque circuit 73 correspond une division et une connection 71c pour un signal de position représentant une digite "xn" du chiffre de position 62. A la graduation 78 peut correspondre plusieurs digites du chiffre de position 62.

A la graduation 79 peut correspondre plusieurs graduations comportant des éléments optiques de types différents. A une division de la graduation 79 peuvent correspondre plusieurs groupes d'éléments récepteurs et à chaque groupe peut correspondre plusieurs éléments récepteurs.

A chaque graduation peuvent correspondre plusieurs unités d'éléments récepteurs, qui peuvent être réparties en plusieurs groupes le long de la graduation, et à chaque unité peut correspondre plusieurs groupes d'éléments récepteurs et à chaque groupe d'éléments récepteurs peut correspondre plusieurs éléments récepteurs. La longueur de division peut être différente d'une graduation à l'autre.

La fig. 15a représente la disposition et la procédure permettant de formuler la fonction des circuits 73.

Les rectangles 80a,80b,80c et 80d caractérisent des secteurs propres à la position du centre d'une division de la graduation 78 et/ou 79. Les deux lignes 18 représentent les abords d'une division par rapport aux éléments récepteurs 6a et 6aa correspondent à la graduation 78, dont le flux lumineux est représenté par la flèche 61a. Les éléments récepteurs 6ax et 6aax et le flux lumineux 61b ou 61c correspondent à la graduation 79. La valeur numérique attribuée au flux lumineux peut être de "1" pour 61b et de "0" pour 61c.

L'élément récepteur 6ax est utilisé pour l'évaluation numérique de la division en position 80a et 80c, l'élément 6cx en position 80b et 80d. A une position 80a correspond une inversion du signal 74a, à une position 80b une inversion du signal 74b, à une position 80c un même signal 74a, à une position 80d un même signal 74b. Les autres combinaisons ne sont pas utilisées. En fait seul une partie de la largueur de l'élément de récepteur est effectivement utilisée pour la détection du chiffre de position 62. La portion active des éléments récepteurs 6ax et 6cx est représentée par un rectangle vide 77c.

Un encodeur à lecture absolue est complet avec un circuit de comptage de nombre de tour, qui de préférence est alimenté par une batterie. Un tel circuit de comptage n'est pas représenté dans le circuit ci-dessus.

La fig. 15b représente une autre configuration des éléments récepteurs selon la graduation 79 où à chaque division correspond seulement un élément récepteur 6ax. Les références de position 81a, 81b, 81c et 81d correspondent aux références de positions 80a, 80b, 80c et 80d de la fig. 15a. Le même raisonnement se rapportant à la fonction logique du circuit 73 peut aussi être conduit. Aux positions 81b et 81d l'influence du flux lumineux 61b ou 61c en un point de l'élément récepteur peut produire deux signaux différent 74, ce qui ne permet pas de garantir une détection correcte du chiffre de position 62. La portion active de l'élément récepteur 6ax est représentée par 77b.

Une réduction de la portion active 76b de l'élément récepteur 6ax permet d'éliminer ces erreurs. La détection de la valeur de division 62 se fait alors seulement selon 81a et 81c. La valeur des signaux 71c peut être mise en mémoire dans le circuit 73. Cette disposition représente un désavantage d'ordre pratique, parce que lors de la mise sous tension du dispositif, une détection de la position absolue sur les points 81b et 81d n'est pas garantie. Il faudra chercher la position absolue par un petit déplacement.

Une autre possibilité consiste à suivre dans plusieurs registres de mémoire les modifications du chiffre de position 62. un changement de position peut sur la base de ces informations être acquitté ou assuré. Une tabelle peut comprendre, par exemple, trois chiffres de position, la valeur actuelle et les deux chiffres avoisinants. Les chiffres de position avoisinants peuvent être calculés selon les besoins. Cette disposition peut présenter le désavantage d'une perte possible de la valeur absolue.

La disposition des éléments récepteurs, des divisions et des valeurs numériques dans les exemples cités peuvent être attribuées différemment.

Pour une adaptation de circuit intégré à plusieurs types de graduation, le développement d'un circuit intégré étant complexe et coûteux, il sera souhaitable de concevoir un circuit contenant une quantité d'éléments récepteurs qui pourront être reliés par bonding ou par connections métalliques appartenant à un seul masque lithographique.

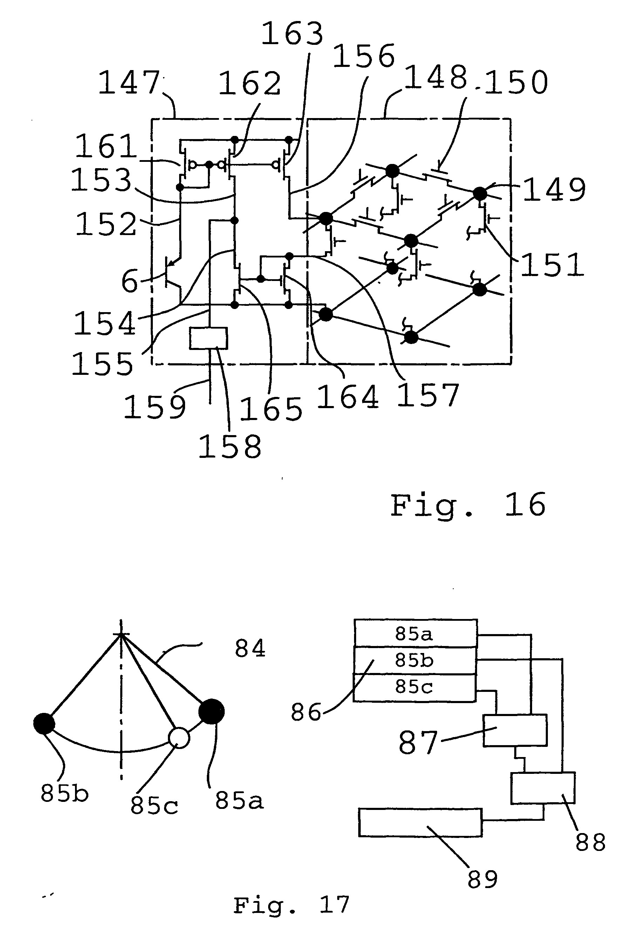

La fig. 16 représente une adaptation d'un circuit neuronique au dispositif qui peut être utilisé pour la réalisation du ou d'une partie du circuit de détection. Le circuit comprend un réseau neuronique 148 avec ces noeuds caractéristiques 149, auxquels sont rattachés un circuit 147 pouvant comprendre un élément récepteur 6 et une sortie de signal digital 159 pouvant correspondre aux connections 71a, 71b, 74a et 74b représentées en figure 15. Chaque noeud du réseau 149 est relié à son voisin par de préférence une résistance 150 et vers la masse par de préférence une conductance 151. Les éléments 150 et 151 peuvent être une ou plusieurs résistances et/ou transistors, ayant de préférence une caractéristique linéaire. La tension de jonction peut être apportée par un ou plusieurs circuits non-représentés sur la figure, qui, le cas échéant, peuvent dépendre du circuit 147. Le choix des valeurs de conductances et/ou de résistance sont déterminantes pour la sensibilité de détection du circuit.

Le circuit 147 comprend un élément récepteur générant un courant 152. L'arrangement des transistors 161, 162 et 163 engendre un courant 153 et 156 de même valeur que 152. Le courant 157 resulte de la somme des courants fournis par les éléments récepteurs. L'arrangement de transistor 164 et 165 définit le courant 154 représentant la différence des courants 153 et 155, qui sera transformé par un circuit d'évaluation 158 à niveau de déclenchement (threshold) en valeur binaire.

Ce type de circuit à l'avantage de pouvoir contrôler un grand nombre d'éléments récepteurs tout en pouvant être intégré avec les éléments récepteurs sur le même support 8. Il est particulièrement intéressant pour la réalisation du circuit de détection d'un encodeur absolu.

La fig. 17a et 17b représente une procédure permettant de calculer la position moyenne d'un dispositif oscillant représenté par 84, l'amplitude maximale des trois dernières oscillations 85a, 85b et 85c. Un registre rotatif 86 met en mémoire les 3 valeurs 85a, 85b et 85c. La valeur moyenne de 85c et 85a est calculée par 87 et la valeur moyenne entre 87 et 85b en 88 ce qui permet d'enregistrer la valeur réelle immédiatement après l'enregistrement d'une nouvelle valeur 85c.

Cette procédure permet de concevoir un capteur pour une lecture rapide des données de position, sans avoir recours nécessairement à un dispositif d'amortissement.

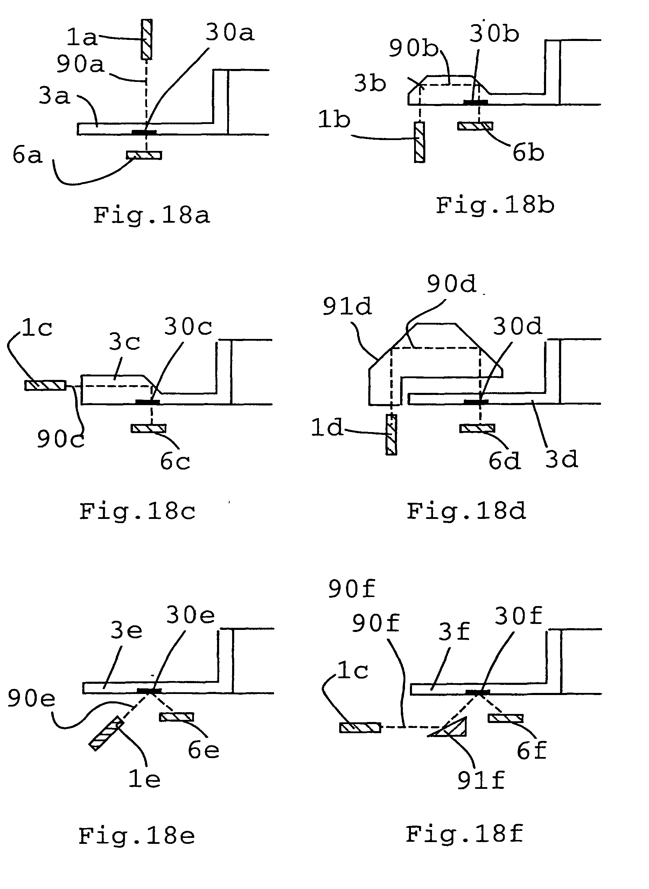

Les fig 18a, 18b, 18c, 18d, 18e et 18f représentent différentes dispositions de la source lumineuse 1, du support de graduation 3 correspondant à une demi-coupe d'un support circulaire, de la graduation 30, d'élément optique 91, du flux lumineux 90 et de un ou plusieurs éléments récepteurs 6.

Les avantages de la présente invention sont :

- la réalisation de cellule de captage permettant d'atteindre de très haute résolution de l'ordre de 0.0005° d'angles avec un circuit de fonctionnement simple,
- la réalisation de capteur dont la mesure sera stable en fonction du temps, même lors de changement de températue et d'humidité élevée,
- la fréquence de résonnance est très basse, et pour des capteurs de mouvement pour véhicule:

    - à part les avantages ci-dessus une grande fidélité de mesure de petites accélérations de l'ordre de 0.5 mg
    - une conception représentant des coûts de fabrication intéressant pour la branche automobile.

    et permettant de réaliser des potentiomètre digitaux de 10 à 16 bits dans des dimensions petites et à des prix compétitifs,

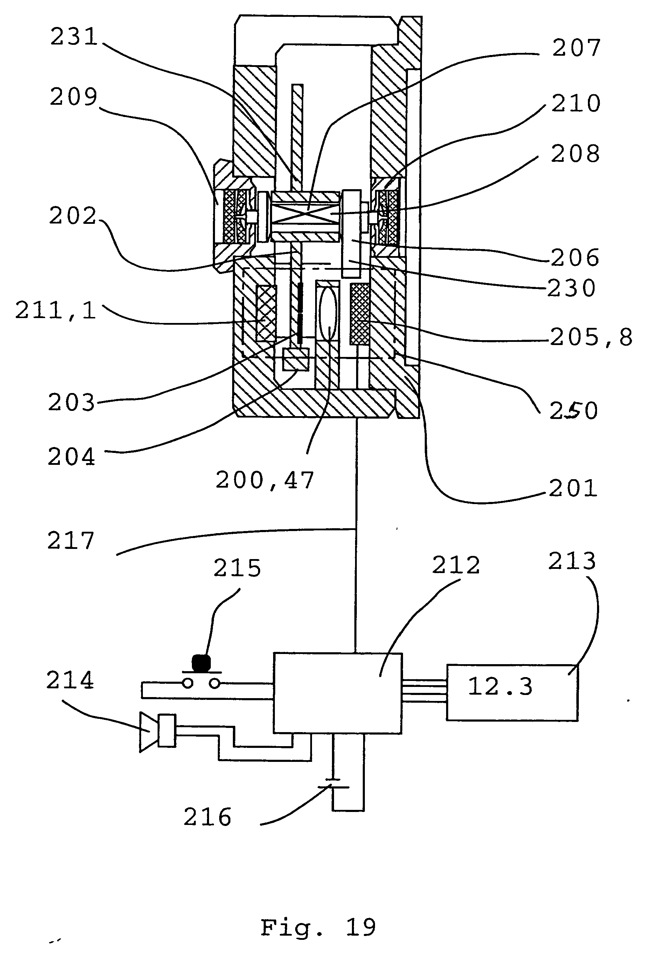

La fig. 19 représente un ensemble capteur gravitationnel avec son circuit de contrôle comprenant un boîtier 201, un système mécanique oscillant 231 comprenant une masse excentrée 204 et un disque 202 sur lequel peut être placé une ou plusieurs graduations 203 permettant de lire la position ou le déplacement angulaire du système oscillant 231 par une ou plusieurs têtes de lecture 250.

Le système mécanique oscillant 231 est posée sur un palier de faible frottement à débattement angulaire limité 207 solidaire de l'arbre 208, lequel à l'aide d'une masse excentrée 206 forme un deuxième système mécanique oscillant 230 qui est posé de préférence sur deux paliers lisses 209 et 210 faisant corps avec le boîtier 201. Les paliers à pivot

EP 0 781 398 B1

de type horloger 209 et 210 font corps avec le boîtier et sont de préférence de type anti-choc.

Une ou plusieurs têtes de lecture 250 ou groupes d'élément récepteurs 6 seront placées de préférence de manière équidistante sur une circonférence correspondant aux dimensions de l'échelle de division. La tête de lecture 250 représentée comprend une source lumineuse 211, un dispositif optique 220 et un ou plusieurs éléments récepteurs placés de préférence sur un circuit intégré 205 ou support 8.

Les deux têtes de lecture seront placées de préférence à 180° l'une de l'autre permettant ainsi de compenser les erreurs d'exentricité de l'échelle circulaire 203 par rapport au centre de rotation du ou des paliers du capteur lors de la lecture par décomptage des impulsions provenant des deux systèmes. La source lumineuse 211 représente une diode lumineuse ou une source radio-luminescence activée par exemple au Tritium qui fournit l'énergie nécessaire pour détecter le déplacement de l'échelle 203 par l'intermédiaire du circuit intégré 205.

Le système optique 220 a pour tâche d'assurer une bonne lecture de la position de l'échelle. Lorsque la division de l'échelle devient petite la distance entre le disque et le circuit de détection devient critique. Les fils de bonding et le montage mécanique ne permettront pas de réaliser des conditions de lecture optimale. Il s'averre alors nécessaire d'introduire par exemple un élément optique composé de une ou plusieurs lentilles projetant l'image du flux lumineux sur le plan où sont placés les éléments récepteurs. Une autre possibilité réside dans l'emploi d'un bouquet de fibres optiques comportant plusieurs fibres optiques misent côte à côte qui de préférence sera posé ou collé sur la surface des capteurs.

L'échelle 203 ou la graduation sera constituée d'une suite d'éléments optiques. Ces éléments optiques peuvent être réalisés injection plastique ou impression mécanique dans un support métallique ou plastique. Le disque 231 peut aussi reposer sur les paliers 209 et 210, ce qui par contre peut réduire la résolution mécanique du capteur. En place des paliers de frottement 209 et 210 peut correspondre des paliers de roulement miniatures, à frottement ordinaire et/ou des paliers à suspension magnétique contrôles, c'est à dire dont la position est contrôlée électriquement. L'emploi de palier fait d'aimant permanent est aussi envisageable avec des matériaux adaptés à cet effet.

L'emploi de plusieurs échelle 203 de graduation a l'avantage de permettre un passage d'un système de mesure à l'autre par example mm/m à degré d'angle (360 divisions) ou autres valeurs sans avoir la nécessité de convertir ces valeurs par example par calculation.

Un circuit digital 212 représentant de préférence un système micro-processeur raccordé par un ou plusieurs conducteurs 217 au circuit intégré 205 est responsable pour la gestion des valeurs mesurées, pour l'affichage sur l'indicateur optique 213 ou par méthode acoustique 214, la gestion de un ou plusieurs boutons poussoirs 215 et autres opérations à intégrer dans le système. De préférence une batterie 216 alimentera le circuit électrique.

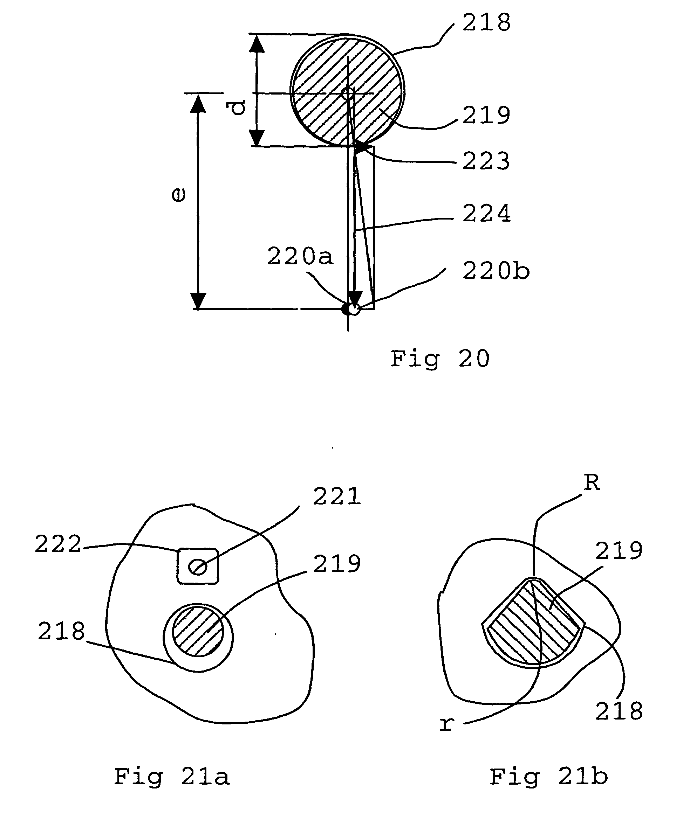

La fig 20 représente un palier lisse, l'axe 219 de diamètre "d" reposant sur un palier 18 de diamètre "D". Le point 220a représente le centre de gravité du système oscillant. Le point 220b représente la position extrême du centre de gravité avant glissement de l'axe 219 par rapport au palier 218. Le vecteur 224 représente le poids du disque "G" et le vecteur 223 la force de frottement maximale égale à $\mu$ x D/2 x G. La valeur "e" représente la distance entre l'axe de rotation et le centre de gravité du système oscillant.

La disposition des deux vecteurs montre le rapport des forces entrant en jeux avant le glissement des deux parties. La position extrême du centre de gravité 220b et la valeur du diamètre du palier 219 ainsi que le coefficient de frottement détermine la résolution mécanique angulaire minimale du système qui est égale à: - 2 x arctan (($\mu_o$ x D) / (2 x e)) Soit par exemple la résolution mécanique angulaire minimale avec des valeurs de D= 70$\mu$m, $\mu_o$=0.12, e= 5 sera de 0.096 degré.

Un autre type de palier consiste en un palier lisse ségmenté dont le diamètre correspondant peut être réduit à de très faible valeurs comme par exemple à 10 $\mu$m sans que la résistance ou la fabrication devienne impossible. Une résolution avec les valeurs de D=10$\mu$m, $\mu_o$=0.12, e=5 est de 0.014 degré.

Un autre type de palier conciste en un palier de roulement à très faible frottement dont la résolution mécanique angulaire minimale est de: = 2 x arctan (0.00066 * $\sqrt{(d/2)}$ / (e)) La résolution mécanique mécanique minimale avec des valeurs de D= 200$\mu$m, d - 180 $\mu$m, $\mu_o$=0.12, e= 5 est de 0.00454 degré.

Un autre types de palier consiste en l'utilisation d'une pièce flexible de préférence un ressort permettant de créer une suspension d'un débattement angulaire limité à faible frottement mais qui a le désavantage d'introduire une force proportionnelle au déplacement du ressort.

L'emploi d'un palier à faible frottement avec un débattement angulaire restreint combiné à un deuxième système oscillant 230 (fig.19) permet de mettre à profit les avantages du premier. Le premier système oscillant 231 fig.19 est conçu de telle sorte qu'il puisse osciller d'une valeur d'angle au moins supérieure à la valeur d'angle de résolution mécanique angulaire du deuxième système oscillant 230.

La Fig 21a représente une forme simple de palier de roulement comprenant un axe 219 sur lequel est posé un palier 218 dont le débattement angulaire est limité par une goupille ou un doigt 221 solidaire de l'axe 219 pouvant se déplacer à l'intérieur d'une ouverture 222 solidaire du palier 218. Les deux surfaces de roulement des pièces 219 et 218 peuvent être lisses ou de préférence totalement ou partiellement dentées de telle façon qu'un glissement relatif angulaire des deux systèmes oscillants puisse être évité. Une denture introduira un frottement supplémentaire au dé-

13

triment des avantages du système. L'emploi d'une denture en développente de cercle à grand angle de pression permettra de réduire cet inconvénient. L'emploi d'un autre profil de denture peut aussi être envisagé.

La Fig 21b représente une solution plus rigide développant par contre plus de frottement comprenant un axe 219 de rayon "r" et un palier 218 de rayon "R". Cette disposition à l'avantage de garantir la position angulaire entre les deux systèmes oscillants 231 et 230. L'angle de débattement peut être contrôlé par le palier ou par une butée supplémentaire similaire à celle décrite en fig 21a.

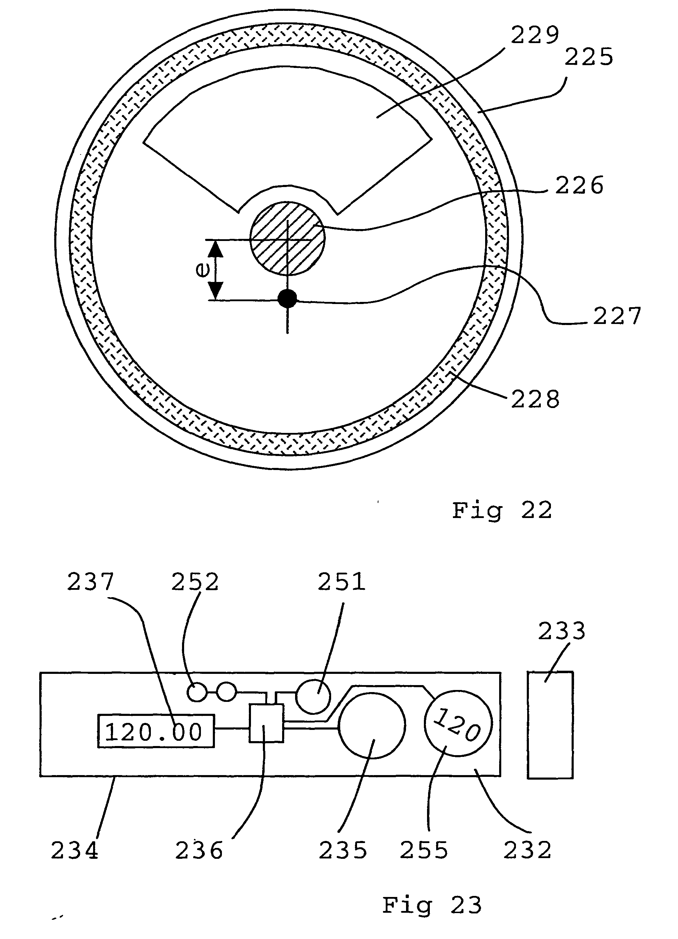

La fig 22 représente un disque de préférence d'épaisseur constante 225, d'un axe 226 reposant dans un palier de diamètre suppérieur, une ouverture 229 permettant de déplacer le centre de gravité 227 à une distance "e" de l'axe de rotation du disque 225 ou de l'ensemble de graduation 228,22 permettant d'évaluer le déplacement angulaire du disque 225.

La distance du centre de gravité "e" par rapport au centre de rotation du palier et la masse d'inertie du disque 225 sont deux valeurs importantes qui définissent la fréquence propre du système. Une petite valeur de "e" réduit la fréquence propre mais par contre réduit aussi la résolution mécanique. Lors de la réalisation de capteur à faible résonance propre il sera nécessaire de choisir des paliers à faible frottement combinés avec un deuxième système oscillant 230.

La fig 23 représente un appareil de mesure à niveau à bulle électronique comprenant un corps 232 avec une face de référence 234. Un capteur gravitationel 235 comme décrit ci-dessus sera mécaniquement directement ou par l'intermédiaire d'une liaison élastique ou anti-choque fixé sur le corps de l'appareil 232 et rattaché électriquement à un circuit de détection 236 qui par example communiquera les valeurs mesurées à l'utilisateur par l'intermédiaire d'un ou plusieurs panneaux d'affichage numérique 237 et/ou un ou plusieurs éléments de signalisation accoustiques 251 et/ou un ou plusieurs éléments de signalisation optique 252 et/ou un panneau d'affichage orientable 255. 233 représente une vue de côté de l'appareil de mesure.

Le paneau d'affichage 255 pourra être orienté manuellement et/ou par l'intermédiaire d'un système oscillant analogue aux système oscillant 235. La communication des signaux pour l'affichage des valeurs peut se faire par contacts métalliques et/ou par transmission infrarouge et/ou inductive.

Cet appareil de mesure sera à même de mesurer avec grande précision l'inclinaison d'un plan par rapport à la verticale et/ou de comparer l'inclinaison d'un plan avec un autre.

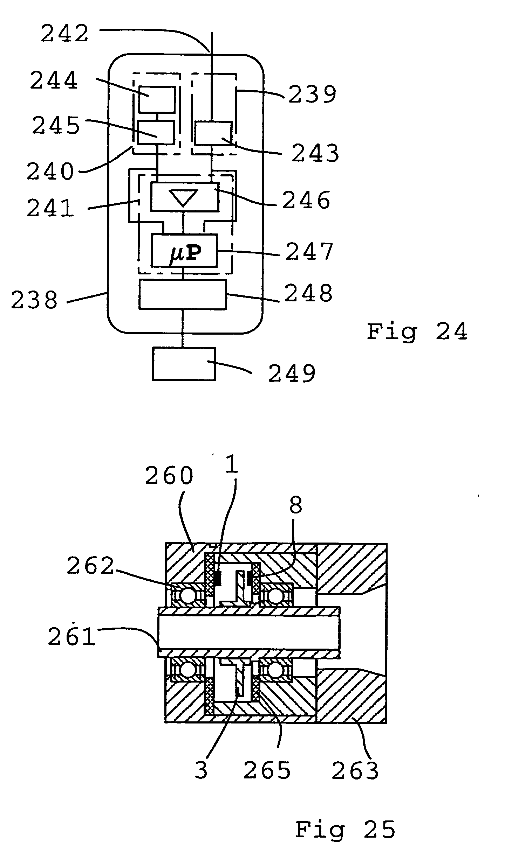

La fig 24 représente le schéma bloc d'un compteur kilométrique tel décrit dans la demande internationale de brevet PCT/EP 93/02415 (WO 9 406 100) en fig 3a à 3b comprennant un boîtier 238, une première unité d'évaluation 239 avec une entrée de signal 242 et un circuit pour le traitement de ce signal 243 à laquelle sera reliée de préférence un signal d'impulsions kilométriques. Une deuxième unité d'évaluation 240 comprenant un ensemble capteur 244, de préférence d'accélération, et un circuit pour le traitement de ce signal 245, un circuit comparateur de signaux 246, un circuit digital par example un microprocesseur 247, une unité mémoire 248 et une sortie de données 249 pour le transfert des données à l'extérieur.

L'application d'un capteur gravitationnel tel que décrit ci-dessus permet de remplir les conditions requises par le dispositif de la fig. 24 de manière simple et à faible coût. Le comptage se fait de manière digitale, il permet aussi de simplifier fortement les algorythmes de travail et de réduire les temps de calcul pour la deuxième unité d'évaluation 245 ainsi que le circuit électronique attenant. Il a en particulier l'avantage de pouvoir être facilement étalonner par simple mise à zéro du compteur.

Les valeurs délivrées par le capteur d'accélération 244 et de déplacement 242 seront transformées en 245 et 243 en valeurs d'accélération ou de déplacement est comparées en 246. Du fait que un véhicule n'est pas toujours orienté dans le plan horizontal, les valeurs comparées seront entâchées d'erreurs. Une analyse par méthode de statistique des valeurs de comparaison permettra quand même d'indiquer si les valeurs d'impulsions kilométriques sont constantes ou correctes.

Cette procédure permet de quantifier de façon automatique la valeur des impulsions kilométriques reçues par comparaison des valeurs d'impulsion pendant les période d'accélération, ce qui facilitera le montage de l'appareil sur le véhicule. Il permet de contrôler si le véhicule délivre les impulsions au système d'enregistrement lors du déplacement de celui-ci et/ou si la valeur de ces impulsions est correctes ou non. Les valeurs contrôlées sont gardées en mémoire et remises en même temps que les données kilométriques à une centrale informatique qui évaluera les données enregistrées.

L'emploi d'un capteur à graduation absolue permettra d'augmenter la fiabilité du système, qui basera ses mesures sur une horizon constante, ce qui augmente la fiabilité des algorythme utilisés pour le contrôle de l'enregistrement. La même base de calcul sera maintenue après une coupure de courant.

La figure 25 représente un exemple d'encodeur comprenant un support de graduation 2 placé sur un arbre tubulaire 261, un support 8 où sont placés les éléments récepteurs placé sur une base 264, une source de lumière 1, un boîtier représenté par 260,263 et des paliers à bille 262.

**Revendications**

1. Un procédé permettant de détecter à l'aide d'un faisceau lumineux la position relative ou absolue selon une direction de déplacement (25) d'un support de graduation (3) par rapport à un support (8) appartenant à un dispositif, qui comprend:

   a- une source de lumière (1) générant un flux lumineux (12)
   b- un support de graduation (3) comprenant au moins une graduation (30) placée dans le flux lumineux (13) qu'il modifie,
   c- un support (8) contenant un ou plusieurs éléments récepteurs pouvant intercepter le flux lumineux modifié (13),
   d- un ou plusieurs éléments récepteurs (6) permettant de convertir l'intensité de lumière interceptée en un effet physique,
   e- et un circuit de détection (59) permettant de générer un signal électrique (22 et/ou 23),

   **caractérisé en ce que** la graduation (30) est faite d'une suite d'éléments optiques (4) comprenant une portion focalisante (31),
   et **en ce que** le flux lumineux intercepte une suite d'éléments optiques (4), qui générent par focalisation plusieurs spots lumineux (11) sur le support (8) contenant les éléments récepteurs (6),
   et **en ce que** chaque élément optique (4) génère un seul spot lumineux
   et **en ce que** à un recouvrement maximal en énergie lumineuse (24) d'un élément récepteur par un desdits spots lumineux (11) correspond une valeur soit maximale ou minimale d'un signal alterné (22).

2. Un procédé selon la revendication 1 **caractérisé en ce que** les spots lumineux générés par les éléments optiques sont de forme oblongue ou principalement rectangulaire.

3. Un procédé selon la revendication 1 **caractérisé en ce que** à au moins un premier signal de position (74a,74b), qui dépend d'une division appartenant à une ou plusieurs graduations (79) faites de plusieurs types d'éléments optiques (4) différents, correspond un deuxième signal de position (71c), qui dépend du ou des signaux de position (75a,75b), et qu' au moins une graduation (78) faites d'éléments optiques (4) identiques pouvant détecter la position relative d'une division (4) par rapport au support (8) et qui dépend du ou des premiers signaux de position (74a, 74b), ledit deuxième signal de position (71c) correspondant à une digite d'un chiffre de position (62) permettant de caractériser la valeur absolue de position entre le support de graduation (3) et le support (8).

4. Un procédé selon les revendications 3 **caractérisé en ce que** un ou plusieurs chiffres de position (62) et/ou un ou plusieurs signaux de position (71) correspondant à la position absolue entre le support de graduation (3) et le support (8) sont mis dans une mémoire pour assurer une détection correcte du chiffre de position (62).

5. Un dispositif permettant de détecter à l'aide d'un faisceau lumineux la position relative ou absolue selon une direction de déplacement (25) d'un support de graduation (3) par rapport à un support (8) appartenant audit dispositif, qui comprend:

   a- une source de lumière (1) générant un flux lumineux (12)
   b- un support de graduation (3) comprenant au moins une graduation (30) placée dans le flux lumineux (13) qu'il modifie,
   c- un support (8) contenant un ou plusieurs éléments récepteurs pouvant intercepter le flux lumineux modifié (13),
   d- un ou plusieurs éléments récepteurs (6) permettant de convertir l'intensité de lumière interceptée en un effet physique,
   e- et un circuit de détection (59) permettant de générer un signal électrique (22 et/ou 23),

   **caractérisé en ce que** la graduation (30) est faite d'une suite d'éléments optiques (4) ou division comprenant au moins une portion focalisante (31),
   et **en ce que** le flux lumineux (12) intercepte plusieurs éléments optiques (4), qui génère par focalisation plusieurs spots lumineux (11) sur le support (8) contenant les éléments récepteurs,
   et **en ce que** à chaque élément optique (4) corresponde un seul spot lumineux.

6. Un dispositif selon la revendication 6 **caractérisé en ce que** les éléments optiques (4) sont de forme oblongue ou principalement rectangulaire.

**7.** Un dispositif selon la revendication 5 **caractérisé en ce que** la surface de projection (34), qui correspond à la projection de la surface de la portion focalisante (31) de l'élément optique (4) sur le support (8), est plus grande que la surface (37) correspondant à l'intersection entre la surface de au moins un élément récepteur (6) et ladite surface de projection (34),

et **en ce que** la largeur (9) d'au moins un élément récepteur (6) soit plus petite que la largeur (35) de la surface de projection de une portion focalisante (31).

**8.** Un dispositif selon la revendication 5 **caractérisé en ce que** à une portion de valeur maximale (22a) du signal alterné (22) correspond un ou plusieurs éléments récepteurs (6a ou 6a et 6c) et à une portion de valeur minimale (22b) du signal alterné (22) correspond un ou plusieurs éléments récepteurs (6b ou 6b et 6d) permettant par comparaison des signaux obtenus par au moins deux éléments récepteurs (6a et 6b ou 6c et 6d) de générer un signal alterné (22) dont la valeur est indépendante de la valeur du flux lumineux émis par la source de lumière (1).

**9.** Un dispositif selon la revendication 5 **caractérisé en ce que** à une division correspond plusieurs groupes d'éléments récepteurs (6) de telle sorte que la résolution unitaire soit plus grande que la résolution de la graduation.

**10.** Un dispositif selon la revendication 5 **caractérisé en ce que** la source lumineuse (1) et/on la section de l'image (21) émis par la source de lumière est de forme oblongue, de préférence rectangulaire et/ou de forme égale à la forme des éléments récepteurs (6).

**11.** Un dispositif selon les revendications 5 ou 10 **caractérisé en ce que** la source lumineuse (1) est placée sur le plan final (5) au delà duquel il n'est plus possible de diminuer de l'image portée sur le plan d'image (7), ou entre le plan final (5) et le support de graduation (3), permettant de définir la largeur B,11 du ou des spots lumineux agissant sur les éléments récepteurs 6.

**12.** Un dispositif selon les revendications 5, 8 ou 9 **caractérisé en ce que** deux éléments ou deux groupes d'éléments récepteurs (56,57) sont placés sur un même plan à une distance mesurée parallèlement à la ligne médiane (32) égale au 1/4 d' une longueur de division unitaire et **en ce que** à ces éléments ou groupes d'éléments correspondent deux signaux pouvant définir un vecteur (26), lui-même définissant une courbe circulaire (27) et un angle (28) permettant de situer avec précision la position du support de graduation (3) par évaluation des valeurs émises par les deux signaux en un point et/ou moment donné.

**13.** Un dispositif selon la revendication 5 **caractérisé en ce que** le support de graduation (3) est fait d'un même matériel et que la graduation est fabriquée par un procédé d'injection et/ou par impression d'une forme, la surface pouvant être recouverte d'une couche de réflection.

**14.** Un dispositif selon la revendication 5 ou 13 **caractérisé en ce que** le support de graduation (3) comporte une ou plusieurs graduations (79) faites de types d'éléments optiques (4) identiques dont les portions focalisantes (31) modifient le flux lumineux (13,12) de telle sorte que la forme et/ou la position du spot lumineux (11) par rapport au périmètre (33) qui correspond à la projection de l'élément optique (4) sur le support (8) soit identique pour chaque division, et/ou

**en ce que** le support de graduation (3) comporte une ou plusieurs graduations (79) faites de types d'éléments optiques (4) différents dont les portions focalisantes (31) modifient le flux lumineux (13,12) de telle sorte que la forme et/ou la position du spot lumineux (11) par rapport au périmètre (33), qui correspond à la projection de l'élément optique (4) sur le support (8), est différente d'une division à l'antre, ce qui permet d'attribuer une valeur numérique (60) à chaque type de divisions ou d'éléments optiques (4), ladite valeur numérique pouvant être de base 2,3 ou autre.

**15.** Un dispositif selon les revendications 5 ou 14 **caractérisé en ce que** le support de graduation comporte une graduation (78) faites d'éléments optiques identiques et au moins une deuxième graduation faite d'éléments optiques différents, qui permet de synchroniser la détection de la valeur numérique d'une division (62) correspondant à une position du spot lumineux (11) généré par une ou plusieurs autres graduations (79) faites d'éléments optiques (4) différents.

**16.** Un dispositif selon les revendications 5,13,14 ou 15 **caractérisé en ce que** le support de graduation (3,68) comprend au moins une graduation (66) formée par un ou plusieurs segments de graduation (66) qui correspondent à un ou plusieurs indexes de référence.

**17.** Un dispositif selon la revendication 16 **caractérisé en ce que** un ou plusieurs segments de graduation (66) comportent une suite d'éléments optiques différents permettant d'accorder un chiffre de position (62) à par exemple chaque indexe de référence.

**18.** Un dispositif selon la revendiction 5 **caractérisé en ce que** au moins un élément optique (4) d'une graduation (30) comporte un élément focalisant (31) correspondant à une lentille de forme essentiellement cylindrique à base rectangulaire ou trapézoïdale placée perpendiculairement à l'axe de déplacement (32).

**19.** Un dispositif selon les revendictions 5 ou 17 **caractérisé en ce que** au moins un élément optique (4) d'une graduation (30) comporte un élément focalisant (31) dont l'axe optique ne correspond pas à l'axe de symétrie (17) de la division.

**20.** Un dispositif selon les revendications 18 ou 19 **caractérisé en ce que** l'élément focalisant (31) est courbé dans le sens de sa largeur (21) de telle sorte que l'image projetée sur le plan d'image (7) est moins longue que la longueur (21) de l'élément optique (4).

**21.** Un dispositif selon les revendications 5, 13 18 ou 19 **caractérisé en ce que** le support de graduation (3) comprend au moins un élément réfléchissant et/ou que les éléments optiques (4) et/ou la portion focalisante (31) de celui-ci travaille essentiellement par réflexion.

**22.** Un dispositif selon la revendiction 5 **caractérisé en ce que** un élément focalisant (31) correspond à une lentille de type frensel, binaire ou diffractionnelle.

**23.** Un dispositif selon les revendications 5 **caractérisé en ce que** la position du plan d'image (7) correspond approximativement au plan focal défini par les éléments focalisants (4) ou à un multiple de cette distance.

**24.** Un dispositif selon la revendication 5 **caractérisé en ce que** plusieurs éléments récepteurs (6) ou les circuits (147) comprenant au moins un élément récepteur sont reliés entre-eux par un élément conductif et/ou résistif (150) permettant de former un circuit neuronique.

**25.** Un dispositif selon la revendication 5 **caractérisé en ce que** un circuit de détection correspondant à une graduation faite d'éléments optiques différents (79) comprend une zone mémoire permettant de mémoriser un ou plusieurs signaux de position (7i,74) et/ou chiffres de position (62).

**26.** Un dispositif selon la revendication 5 **caractérisé en ce que** le support de graduation (3) et/ou le support (8) comportent un ou plusieurs éléments optiques (91) permettant de dévier le flux lumineux (90) pour une disposition plus appropriée de la source de lumière (1) et au moins d'un élément récepteur (6) par rapport audit support de graduation (2).

**27.** Un capteur gravitationnel comportant un support de graduation circulaire (4, 225) dont le centre de gravité (227) est déplacé par rapport à son axe de rotation formant un système oscillant **caractérisé en ce qu'**il comporte

a) an moins une graduation (30,66) selon les revendications précédentes, et
b) un ou plusieurs éléments ou groupe d'éléments récepteurs (6) selon les revendications précédentes,
c) un support de graduation (225) dont le centre de gravité (227) ne correspond pas à son centre de rotation, ledit support reposant sur an moins un palier faisant corps avec le boîtier (201) du capteur ou au moins un palier à faible frottement, de préférence à débattement limité, pouvant faire corps avec un deuxième système oscillant reposant sur au moins un palier faisant corps de préférence avec la boîtier (201) du capteur.

**28.** Un dispositif ou niveau à bulle électronique permettant de mesurer l'inclinaison d'une surface par rapport à la verticale **caractérisé en ce qu'**il comporte un capteur gravitationel selon les revendications précédentes, de préférence un capteur de graviatation comportant une graduation formée d'éléments optiques différents, et un corps comportant une surface de référence (234) servant d'appui pour la mesure de l'inclinaison du plan.

**29.** Un dispositif pour définir, enregistrer et si possible évaluer les données concernant l'emploi d'un véhicule, qui sera an moins en partie fixé directement ou indirectement sur une pièce de ce véhicule, qui comprend

a) deux unités d'acquisition de données indépendantes,
b) et un circuit digital de préférence un système microprocesseur pour le calcul, la comparaison et/ou la gestion des données provenant de au moins deux unités d'acquisition de données,

c) et une unité mémoire pour enregistrer les données acquises

d) et de préférence un circuit de communication permettant de communiquer les données à l'extérieur du dispositif **caractérisé en ce que** une des deux unités d'acquisition de données (239 et 240) comprend au moins un capteur gravitationnel à mesure absolue ou relative selon les revendications précédentes,

**Claims**

1. Method to detect with a light beam the relative or absolute position of a graduation support (3) along a displacement direction (25) in relation to a support (8) belonging to a device comprising:

   a- a light source (1) producing a light flux (12)
   b- a graduation support (3) including a graduation (30) placed in the light flux which it modifies,
   c- a support (8) containing one or several sensitive elements capable of intercepting the modified light flux (13),
   d- one or several sensitive elements (6), which convert the intercepted light intensity into a physical effect.
   e- and a detection circuit (59) suited to produce an electric signal (22 and/or 23),

   **characterized in that** the graduation (30) is made of a row of optical elements (4) including a focusing portion (3 1), and where the light flux intercepts a row of optical elements (4), which generate through focalisation several light spots (11) on the support (8) containing the sensitive elements (6), and wherein each optical element (4) generates one light spot only
   and where to a maximum overlapping of light energy (24) over a sensitive element (6) corresponds either a minimal (22b) or a maximal (22a) value of an alternating signal (22).

2. Method as the precedent claim 1 where the light spots, which are generated through the optical elements are preferably in an oblong or mainly rectangular shape.

3. Method according to claim 1 where at least one first position signal (74a, 74b), which depends on a division belonging to one or several graduations (79) being made of several types of different optical elements (4), corresponds to a second position signal (71 c), which depends on one or several position signals (75a, 75b) **characterised by** at least one graduation (78) made of identical optical elements (4) capable of detecting the relative position of a division (4) in relation to a support (8) and which depends on one or several first position signals (74a, 74b), the said second position signal (71c) corresponding to a digit of a position number (62) to show the absolute value of the position between the graduation support (3) and the support (8).

4. Method according to claim 3 where one or several position numbers (62) and/or one or several position signals (71) corresponding to the absolute position between the graduation support (3) and the support (8) are stored in a memory to secure a correct detection of the position number (62).

5. Device to detect with a light beam the relative or absolute position on the displacement direction (25) of a graduation support (3) in relation to a support (8) belonging to the said device comprising:

   a- a light source (1) producing a light flux (12)
   b- a graduation support (3) including a graduation (30) placed in the light flux which it modifies,
   c- a support (8) containing one or several sensitive elements capable of intercepting the modified light flux (13),
   d- one or several sensitive elements (6), which convert the intercepted, light intensity into a physical effect.
   e- and a detection circuit (59) suited to produce an electric signal (22 and/or 23),

   where the graduation (30) is made of a row of optical elements (4) or division including at least one focusing portion (31),
   and where the light flux (12) intercepts several optical elements (4), which generates through focalisation several light spots (11) on the support (8) containing the sensitive elements,
   and where to each optical element (4) is corresponding one only light spot.

6. Device according to claim 5 wherein the optical elements (4) have an oblong or mainly rectangular shape.

7. Device according to claim 5 wherein the projection surface (34), which corresponds to the projection surface of the focusing portion (31) of the optical element (4) on the support (8),

is greater than the surface (37) corresponding to the intersection of the surface of at least one sensitive element (6) and the said projection surface (34)

and where the width (9) of at least one sensitive element (6) is inferior to the width (35) of the projection surface of a focusing portion (31).

**8.** Device according to 5 where a maximum value portion (22a) of the alternating signal (22) corresponds to one or several sensitive elements (6a or 6a and 6c) and to a minimal value portion (22b) of the alternating signal (22) corresponds one or several sensitive elements (6b or 6b and 6d) which by the comparison of the produced signal by at least two sensitive elements (6a and 6b or 6c and 6d) can generate an alternating signal (22) whose value is independent of the light flux emitted by the light source (1).

**9.** Device according to claim 5 where a division corresponds to several groups of sensitive elements (6) in such a way that the unit resolution is greater than the graduation's resolution.

**10.** Device according to claim 5 where the light source (1) and/or the section of the image (21) emitted by the light source is formed as an oblong, preferably rectangular, shape and/or as a shape equivalent to the shape of the sensitive elements (6).

**11.** Device according to claim 5 ou 10 wherein the light source (1) is placed on the final plane (5), away of which it is not possible anymore to diminished the dimension of the image projected on image plan (7), or between the final plane (5) and the graduation support (3), and therefore can define the width B,11 of one or more light spots acting on the sensitive elements (6).

**12.** Device according to claims 5, 6 or 8 wherein two elements or two groups of sensitive elements (56, 57) are placed on a same plane at a distance measured parallel to the median line (32) equal to a 1/4 of the length of the unit division (21)

and where these elements or group of elements correspond to two signals capable of defining a vector (26), itself defining a circular curve (27) and an angle (28), which can situate with precision the position of the graduation support (3) by evaluating the emitted values of the two signals at a given point and/or moment.

**13.** Device according to claim 5 where the graduation support (3) is designed out of one material and that the graduation is manufactured by injection moulding and/or pressing of a shape, which surface can possibly be covered by a reflective layer.

**14.** Device according to claims 5 or 13 where the graduation support (3) contains one or several graduations (79) made of identical optical elements (4) whose focusing portions (31) modify the light flux (13, 12) in such a manner that the shape and/or the position of the light spot (11) in relation to the perimeter (33), which corresponds to the projection of the optical element (4) on the support (8), is identical for each division.

and/or where the graduation support (3) contains one or several graduations (79) made of different optical elements (4) whose focusing portions (31) modify the light flux (13, 12) in such a manner that the shape and/or the position of the light spot (11) in relation to the perimeter (33), which corresponds to the projection of the optical element (3) on the support (8), is different from one division to the other which enable to assign a numerical value (60) to each type of division or type of optical element (4), the said numerical value which can correspond to a mathematical base of 2, 3 or some other one.

**15.** Device according to claims 5 or 14 where the graduation support contains a graduation (78) made of identical optical elements and at least a second graduation made of different optical elements for synchronising the detection of the numerical value of a division (62) corresponding to a position of the light spot (11) generated by one or several other graduations (79) made of different optical elements (4).

**16.** Device according to claims 5, 13, 14 or 15 where the graduation support (3, 68) contain at least a graduation (66) formed by one or several segments of graduation (66) which correspond to one or several reference indexes.

**17.** Device according to claim 16 where one or several graduation segments (66) contain a series of different optical elements to assign a position number (62), for example, to each reference index.

**18.** Device according to claim 5 where at least one optical element (4) or a graduation (30) contains a focusing element (31) corresponding to a lens in an essentially cylindrical shape with a rectangular or trapezoidal base placed perpendicularly to the displacement axis (32).

**19.** Device according to claims 5 or 17 where at least one optical element (4) of a graduation (30) contains a focusing element (31) whose optical axis does not correspond to the symmetrical axis (17) of the division.

**20.** Device according to claims 18 or 19 where the focusing element (31) is curved in the direction of its width (21) in such a manner that the projected image on the image plane (7) is less long than the length (21) of the optical element (4).

**21.** Device according to claims 5, 13, 18 or 19 where the graduation support (3) contains at least a reflecting element and/or the optical elements (4) and/or the focusing portion (31) of this works essentially by reflection.

**22.** Device according to claim 5 where a focusing element (31) correspond to a Frensel-, binary- or diffraction- type of lens.

**23.** Device according to claim 5 where the position of the image plane (7) approximately corresponds to the focal plane defined by the focusing elements (4) or a multiple of this distance.

**24.** Device according to claim 5 where several sensitive elements (6) or the circuits (147) containing at least one sensitive element are joined together by a conductive and/or resistive element (150), which allows the formation of a neuronal circuit.

**25.** Device according to claim 5 where a detection circuit corresponding to a graduation made up of different optical elements (79) contains a memory zone to store one or several position signals (71, 74) and/or position numbers (62).

**26.** Device according to claim 5 where the graduation support (3) and/or the support (8) contain one or several optical elements (91) to deflect the light flux (90) for a more appropriate arrangement of the light source (1) and at least one of the sensitive elements (6) in relation to the said graduation support (2).

**27.** A gravitational sensor containing a circular graduation support (4, 225) whose centre of gravity (227) is displaced in relation to its rotation axis forming an oscillating system where

a) at least a graduation (30, 66) according to the precedent claims, and
b) one or several elements or sensitive elements (6) according to the precedent claims,
c) a graduation support (225) whose centre of gravity (227) does not correspond to its centre of rotation, the said support being supported by means of at least one bearing being part of the sensor casing (201) or at least one low-friction bearing, preferably with limited movement, capable of being part of a second oscillating system being supported by means of at least one bearing preferably being part of the sensor casing (201).

**28.** A device or electronic bubble level to measure the inclination of a surface in relation to the plumb line where it contains a gravitational sensor as the precedent claims, preferably a gravitational sensor containing a graduation formed of different optical elements, and a casing containing a reference surface (234) being used as a support for the measurement of the plane inclination.

**29.** A device to define, record, and if possible, evaluate the data concerning the use of a vehicle which will be at least partly directly or indirectly attached to a part of this vehicle comprising:

a) two independent recording data units
b) and a digital circuit, preferably a microprocessor system, for the calculation, comparison, and/or treatment of the data coming from at least two recording data units,
c) and a memory unit to store the acquired data,
d) and preferably a communication circuit allowing the output of data

where one of the two recording data units (239 and 240) include at least a gravitational sensor with absolute or relative reading in accordance with the precedent claims.

**Patentansprüche**

1. Verfahren zur Bestimmung einer relativen oder absoluten Lage eines Massverkörperungsträgers nach einem bestimmten Bewegungsrichtung (25) relativ zu einem weiteren Träger (8) mit Hilfe eines Lichtbündels, der eine Vorrichtung zugehört, die enthält:

   a- eine Lichtquelle (1) zur Erzeugung eines Lichtflusses (12)
   b- einen Massverkörperungsträger (3) mit einer in sich enthaltenden Massverkörperung (30), die im Lichtfluss angeordnet ist und diesen modifiziert.
   c- einen Träger (8) mit einem oder mehreren Empfängerelementen, die den modifizierten Lichtfluss (13) auffangen können,
   d- ein oder mehrere Empfängerelemente (6), die die aufgefangene Lichtintensität in einen physikalischen Effekt umwandeln können,
   e- und eine Detektionschaltung (59), die ein elektronisches Signal generieren kann (22 und/oder 23),

   **dadurch gekennzeichnet dass** die Massverkörperung (30) durch eine Reihe von optischen Elementen (4) gebildet ist, die jeweils einen fokussierenden Teil (31) enthalten,
   und dass der Lichtfluss eine Reihe von optischen Elementen (4) überstreicht, die durch Fokussierung auf den die Empfängerelemente (6) enthaltenden Träger (8) mehrere Lichtspots (11) erzeugen,
   dass jedes optische Element (4) einen einzigen Lichtspot erzeugt, und
   dass eine maximale Überdeckung (24) eines Empfängerelementes (6) durch einen der besagten Lichtspots (11) mit Lichtenergie ein maximaler oder minimaler Wert eines alternierenden Signals (22) entspricht.

2. Verfahren nach Anspruch 1 **dadurch gekennzeichnet, dass** die durch die optischen Elemente erzeugten Lichtspots eine längliche oder eine im Wesentlichen rechteckige Form haben.

3. Verfahren nach Anspruch 1 **dadurch gekennzeichnet, dass** wenigstens ein erstes Positionssignal (74a, 74b), der eine Teilung zugeordnet ist, die aus einer oder mehreren aus unterschiedlichen Typen von optischen Elementen (4) ausgebildeten Massverkörperungen (79) untergeordnet ist, einem zweiten Positionsignal (71c) übereinstimmt, der vom dem oder mehreren Positionssignalen (74a,74b) abhängig ist, die durch eine zum mindesten mit einem aus mehreren identischen optischen Elementen (4) ausgebildete Massverkörperung **gekennzeichnet** ist, dessen optische Elemente fähig sind, die relative Lage zwischen einer Teilung (4) gegenüber einer zum Träger (8) zu bestimmen und die von einem oder mehreren ersten Positionssignal (74s, 74b) untergeordnet ist, der genannten zweiten Positionsignal (71c) einen Ziffer einer Positionszahl (62) entspricht, der die Möglichkeit bietet, der absolute Positionswert zwischen dem Massverkörperungsträger (3) und dem Träger (8) zu bestimmen.

4. Verfahren nach Anspruch 3, **dadurch gekennzeichnet, dass** ein oder mehrere Positionszahlen (62) und/oder ein oder mehrere Positionssignale (71), die mit der absoluten Position zwischen dem Massverkörperungsträger (3) und dem Träger (8) übereinstimmen, in einem Speicher abgelegt werden um eine korrekte Bestimmung der Positionszahl (62) sicherzustellen.

5. Vorrichtung zur Bestimmung der relativen oder absoluten Lage eines Massverkörperungsträgers (3) relativ zu einem weiteren Träger (8) in einer bestimmten Bewegungsrichtung mit Hilfe eines Lichtbündels, der Teil der Vorrichtung ist, die enthält:

   a- eine Lichtquelle (1) zur Erzeugung eines Lichtflusses (12)
   b- einen Massverkörperungsträger (3) mit mindestens einer Massverkörperung (30), die im Lichtfluss angeordnet ist und diesen modifiziert.
   c- einen Träger (8) mit einem oder mehreren Empfängerelementen, die den modifizierten Lichtfluss (13) auffangen können,
   d- ein oder mehrere Empfängerelemente (6), die die aufgefangene Lichtintensität in einen physikalischen Effekt umwandeln können,
   e- und eine Detektionschaltung (59), die ein elektronisches Signal generieren (22 und/oder 23) kann,

   **dadurch gekennzeichnet dass** die Massverkörperung (30) durch eine Reihe von optischen Elementen (4) oder Division gebildet ist, die jeweils wenigstens einen fokussierenden Teil enthalten,
   und dass der Lichtfluss eine Reihe von optischen Elementen überstreicht, die durch Fokussierung auf dem die Empfängerelemente (6) enthaltenen Träger (8) mehrere Lichtspots (11) erzeugen,

und dass jedem optischen Elements(4) ein einziger Lichtspotentspricht.

6. Eine Vorrichtung nach dem Anspruch 5 **dadurch gekennzeichnet, dass** die optischen Elementen (4) länglich oder im Wesentlichen rechtwinklig sind.

7. Vorrichtung nach Anspruch 5 **dadurch gekennzeichnet, dass** die abgebildete Fläche (34), die mit der Abbildung der Fläche des fokussierten Teils (31) des optischen Element (4) auf dem Träger (8) übereinstimmt, grösser als die Fläche (37), die zur Schnittfläche zwischen der Fläche von zumindest einer der Empfängerelemen-ten (6) und der Fläche 34, ist und dadurch dass die Breite (9) von zumindest eines Empfängerelementes (6) kleiner als die Breite (35) der Projektionsfläche des fokaliesenden Teils (31).

8. Vorrichtung nach Anspruch 5 **dadurch gekennzeichnet, dass** zu einer Portion des maxi-malen Wertes (22a) des alternierenden Signals (22) ein oder mehrere Empfängerelemente (6a oder 6a und 6c) und zu einer Portion des minimalen Wertes (22b) des alternierenden Signals (22) ein oder mehrere Empfängerelemente (6a oder 6b und 6d) entsprechen, wobei durch einen Vergleich der Signale, die von wenigstens zwei Empfängerelementen (6a und 6b oder 6c und 6d) erhalten werden, ein alternierendes Signal erzeugt werden kann, dessen Wert unabhängig vom Lichtfluss aus der Lichtquelle (1) ist.

9. Vorrichtung nach Anspruch 5 **dadurch gekennzeichnet, dass** einer Teilung mehrere Gruppen von Empfängerelementen (6) entsprechen derart, dass die Einheitsauflösung grösser als die Auflösung der Massverkörperung ist.

10. Vorrichtung nach Anspruch 5 **dadurch gekennzeichnet, dass** die Lichtquelle (1) und/oder der von der Lichtquelle ausgestrahlte Querschnitt der Abbildung (21), eine längliche, vorzugsweise eine rechteckige Form und/oder eine ähnliche Form wie die Empfängerelemente (6)hat.

11. Vorrichtung nach Anspruch 5 oder 10, **dadurch gekennzeichnet, dass** die Lichtquelle (1) auf die Endebene (5), über welche hinausgehend die Abmessung der Abbildung auf der Bildebene (7) nicht mehr verkleinert werden kann, oder zwischen der Endebene (5) und dem Massverkörperungsträger (3) angeordnet ist, damit die Breite B,11 des oder der auf die Empfängerelemente fallenden Lichtspots definiertwerden kann.

12. Vorrichtung nach den vorhergehenden Ansprüchen 5, 8 oder 9 **dadurch gekennzeichnet, dass** zwei Empfängerele-mente oder zwei Gruppe von Empfängerelementen (56,57) auf einem selben Ebene mit einem parrallel zur Mittellinie (32) gemessenen Abstand von ¼ einer Länge einer Einheitsauflösung angeordnet sind, und dass zu diesen Empfängerelementen oder Gruppe von Empfängerelementen zwei Signalen, die einen Vektor (26) definieren können, dessen Vektoren eine kreisförmige Linie (27) und ein Winkel bildet, wobei eine genaue Lage des Massverkörperungträgers (3) durch Analyse der beiden Signals zu einem bestimmten Punkt und/oder Zeitpunkt bestimmt werden kann

13. Vorrichtung nach Anspruch 5 **dadurch gekennzeichnet, dass** der Massverkörperungsträger (3) aus einem einzigen Material ausgebildet ist und dass die Massverkörperung durch einem Spritz- und/oder Pressverfahren hergestellt wird, wobei die Fläche der Massverkörperung mit einem Reflexionschicht beschichtet sein kann.

14. Vorrichtung nach den vorhergehenden Ansprüchen 5 oder 13 **dadurch gekennzeichnet, dass** der Massverkörpe-rungsträger (3) eine oder mehrere Massverkörperungen (79) enthält, die aus ähnlichen Typ von optischen Elementen (4) ausgebildet sind, wobei der fokalisierenden Teil der Massverkörperung den Lichtfluss (13,12) verändert, so dass die Form und/oder die Position des Lichtspots (11) im Verhältnis zum Umfang (33), der durch eine Abbildung der Fläche eines optischen Elements (4) auf dem Träger (8) definiert ist, identisch für jeder Teilung ist, und/oder dass der Massverkörperungsträger (3) eine oder mehrere Massverkörperung (79) enthält, die aus unterschiedlichen Typ von optischen Elementen (4) ausgebildet sind, wobei der fokalisierende Teil der Massverkörperung den Lichtfluss (13,12) verändert, so dass die Form und/oder die Position des Lichtspots (11) im Verhältnis zum Umfang (33), der durch eine Abbildung der Fläche eines optischen Elements (4) auf dem Träger (8) definiert ist, von einer Teilung zu einer anderen unterschiedlich ist, wobei möglich wird, jeder Teilung oder optisches Element ein numerischer Wert (60) zu zu ordnen, der sogenannte numerische Wert auf eine mathematische Base von 2, 3 oder sonstiger Wer aufgebaut sein kann.

15. Vorrichtung nach den vorhergehenden Ansprüche 5 oder 14 **dadurch gekennzeichnet, dass** der Massverkörpe-rungsträger (3) eine Massverkörperung enthält, die aus ähnlichen Typ von optischen Elementen (4) ausgebildet sind, und zum mindesten einer zweiten Massverkörperung, die aus unterschiedlichen Typ von optischen Elementen (4) ausgebildet ist, wobei die erste Massverkörperung zur Synchroniesierung bei der Bestimmung des numerischen Wert einer Teilung (62) mittels einem Lichtspot (11) stammend aus einer weiteren Massverkörperung, die aus unterschiedlichen Typ von optischen Elementen (4) ausgebildet ist.

16. Vorrichtung nach den vorhergehenden Ansprüchen 5, 13, 14 oder 15 **dadurch gekennzeichnet, dass** der Markverzögerungskörper (3,68) zumindest eine Massverkörperung (66) enthält, die aus einem oder mehreren Massverkörperungssegment (66), die ein oder mehrere Referenzindex enthält.

17. Vorrichtung nach Anspruch 16 **dadurch gekennzeichnet, dass** ein oder mehrere Massverkör-perungssegmente (66) eine Anreihung von unterschiedlichen optischen Elementen, wobei an jeder Segment ein Position-zahl (62), für zum Beispiel jeder Referenzindex, zugeord-net werden kann.

18. Vorrichtung nach Anspruch 5, **dadurch gekennzeichnet, dass** zumindest ein optischer Element (4) einer Massverkörperung (30) einen fokali-sierenden Element (31) aufweist, wobei der optische Element eine Linse mit einer vorzugsweise zylindrischen Form mit einer rechteckigen oder trapezeförmigen Grundform, die rechtwinklich zur Bewegungsichtung (32) angeordnet ist.

19. Vorrichtung nach den Ansprüchen 5 oder 17, **dadurch gekennzeichnet, dass** die optische Achse eines fokalisierenden Teils von zum mindesten einem der optischen Elementen (4) aus einer Massverkörperung (30), nicht mit der Symetrieachse (17) einer Teilung übereinstimmt

20. Vorrichtung nach den vorhergehenden Ansprüchen 18 oder 19, **dadurch gekennzeichnet, dass** der fokalisierenden Element (31) in Richtung der Breite (21) verbeugt ist, so dass die Abbildung auf den Bildebene (7) ist kürzer als die länge (21) des optischen Elements (4).

21. Vorrichtung nach den vorhergehenden Ansprüchen 5, 13, 18 oder 19, **dadurch gekennzeichnet, dass** der Massverkörperungsträger (3) zumindest einen reflektierenden Element ist und/oder einen optischen Element (4) mit einem fokalisierenden Teil (31) die teis auf Reflexion arbeitet.

22. Vorrichtung nach Anspruch 5, **dadurch gekennzeichnet, dass** ein fokalisierender Element (31) eine Frensellinse, binaire oder diffraktionnelle Linse sein kann.

23. Vorrichtung nach Anspruch 5, **dadurch gekennzeichnet, dass** der Abstand der Bildebene (7) in etwa durch die fokallänge der optischen Elementen (4) bestimmt ist oder ein Mehrfach dieser Fokallänge.

24. Vorrichtung nach Anspruch 5, **dadurch gekennzeichnet, dass** mehrere Empfängerelemente (6) oder die Schaltung (147), die zum mindestens einen Empfän-gerelement enthält, unteranderem durch ein leitendes und/oder resistives Element (150) verbunden sind, um eine neuronale Schaltung auszubilden.

25. Vorrichtung nach Anspruch 5, **dadurch gekennzeichnet, dass** eine Schaltung, die eine Massverköperung mit unterschiedlichen Typ von optischen Elementen enthält, einen Speicherbereich enthält, der zur Speicherung eines oder mehreren Positionssignal (71,74) und/oder Positionszahl (62) eingesetzt wird.

26. Vorrichtung nach Anspruch 5, **dadurch gekennzeichnet, dass** der Massverkörperungsträger (3) und/oder der Träger (8) ein oder mehrere optischen Elementen (91) enthält, wobei der Lichtstrahl (90) für eine bessere Anordnung der Lichtquelle (1) und vonzum mindestens einem Empfängerelement(6) im Verhältnis zu der Massverkörperungsträger umgelenkt werden kann.

27. Gravitationssensor mit einer runden Massverkörperung (4,225), dessen Schwerpunkt (227) ausserhalb seines eigenen Drehpunkts liegt und dadurch ein oszillierendes System bildet, **dadurch gekennzeichnet dass** er enthält:

   a) mindestens eine Massverkörperung (30,66) nach einem der vorhergehenden Ansprüche,
   b) ein oder mehrere Empfängerelementen oder Gruppe von Empfängerelementen (6) nach einem der vorhergehenden Ansprüche,
   c) einen Massverkörperungsträger (225) mit einem Schwerpunkt (227), der nicht dem Rotationspunkt übereinstimmt, der genannten Träger auf zum mindestens einem Lager, der zum Gehäuse (201) des Sensors gehört, oder zum mindestens ein Lager mit niedriegem Reibungswert, vorzugsweise mit einem eingeschränkten Rotationsbereich, der auf einem zweiten oszillenden System aufliegt, das auf zum mindestens einem Lager, das vorzugsweise das Gehäuse (201) des Sensor gehört.

28. Vorrichtung oder elektronische Wasserwaage für die Messung von Neigungen einer Fläche gegenüber dem Lot **gekennzeichnet durch** ein Gravitationssensor nach einem der vorhergehenden Ansprüche, vorzugsweise ein Gravitationssensors mit einer Massverkörperung, die unterschiedliche Typen von optischen Elementen enthält, und einen Körper mit einer Referenzfläche (234) für die Messung der Neigung einer Ebene.

29. Vorrichtung zum Bestimmen, Registrieren und wenn möglich für die Auswertung von Daten betreffend der Einsatz eines Fahrzeuges, die zum mindesten anteilmässig, direkt oder indirekt, auf einen dieses Fahrzeugstück angebaut ist, der enhält:

a) zwei unabhängige Ermittlungseinheiten,
b) eine digitale Schaltung, vorzugsweise ein Microprocessorsystem für die Berechnung , den Vergleich und/ oder die Verwaltung von Daten, die zum mindestens aus einem der beiden Ermittlungseinheiten erfasst werden,
c) einen Speicher für die Speicherung der erfassenden Daten,
d) und vorzugsweise ein Kommunikationsschaltung zur Übertragung von Daten aus der Vorrichtung, dadurch gekenntzeichnet, dass eine der zwei Ermittlungseinheiten (239 und 240) zu mindesten ein Gravitationssensor mit relativer oder absoluter Messung nach einem der vorhergehenden Ansprüche enthält.

Fig.1

Fig. 2a          Fig. 2b

Fig. 3

fig. 4a     fig. 4b     Fig. 4c

Fig. 4d

Fig. 5

Fig. 6a

Fig. 6b

Fig. 6c

Fig. 6d

Fig. 6

Fig. 7

Fig.8

Fig. 9a

Fig. 9b

Fig. 9c

Fig. 10a

Fig. 10b          Fig. 10c          Fig. 10d

Fig. 11a

Fig. 11c

Fig. 11b

Fig. 11d

Fig. 12a

62

1      1111
1      1110
1      1101
1      1010
63
0      0101
1      1011
0      0110
1      1100
1      1001
64
0      0010
0      0100
1      1000
0      0000
65
0      0001
0      0011
0      0111

Fig. 12b

66      67      68      69

Fig. 13

Fig. 14

Fig. 15a          Fig. 15          Fig. 15b

Fig. 16

Fig. 17

Fig.18a

Fig.18b

Fig.18c

Fig.18d

Fig.18e

Fig.18f

231
207
209
210
208
202
206
230
211,1
205,8
203
204
250
200,47
201
217
215
214
212
213
12.3
216

Fig. 19

218

d

219

223

e

224

220a

220b

Fig 20

221

222

219

218

Fig 21a

R

219

218

r

Fig 21b

229
225

226

227

228

Fig 22

237    252    251

233

120.00

120

234    236    235    255    232

Fig 23

40

242
244
245
240
241
238

239
243
246
247
248

μP

249

Fig 24

260    1    8
262
261

3    265    263

Fig 25